(19) Europäisches Patentamt
European Patent Office
Office européen des brevets

(11) EP 1 139 083 B1

(12) EUROPEAN PATENT SPECIFICATION

(45) Date of publication and mention of the grant of the patent:
**11.05.2016 Bulletin 2016/19**

(51) Int Cl.:
***G01K 17/00*** *(2006.01)* ***G01K 17/04*** *(2006.01)*
***G01N 25/48*** *(2006.01)*

(21) Application number: **01107288.1**

(22) Date of filing: **23.03.2001**

(54) **Differential scanning calorimeter**

Differentialabtastkalorimeter

Calorimètre différentiel à balayage

(84) Designated Contracting States:
**BE CH DE FR GB LI NL**

(30) Priority: **23.03.2000 US 533949**
**23.08.2000 US 643869**
**23.08.2000 US 643870**
**26.01.2001 US 769313**

(43) Date of publication of application:
**04.10.2001 Bulletin 2001/40**

(73) Proprietor: **Waters Technologies Corporation**
**Milford, MA 01757 (US)**

(72) Inventor: **Danley, L. Robert**
**Collingswood,**
**NJ 08107 (US)**

(74) Representative: **Harding, Andrew Philip et al**
**Forresters**
**Skygarden**
**Erika-Mann-Strasse 11**
**80636 München (DE)**

(56) References cited:
**EP-A- 0 701 122**
**WO-A-95/33199**
**US-A- 5 224 775**
**US-A- 5 599 104**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 139 083 B1

## Description

## BACKGROUND

Differential Scanning Calorimeters measure the heat flow to a sample as the sample temperature is varied in a controlled manner. There are two basic types of DSCs, heat flux and power compensation DCSs. Brief descriptions of the two types of DSC are included below. A detailed description of the construction and theory of DSCs is disclosed in "Differential Scanning Calorimetry an Introduction for Practitioners", G. Höhne, W. Hemminger and H.-J. Flammersheim (Springer-Verlag, 1996).

Heat flux DSCs include a sensor to measure heat flow to a sample to be analyzed. The sensor has a sample position and a reference position. The sensor is installed in an oven whose temperature is varied dynamically according to a desired temperature program. As the oven is heated or cooled, the temperature difference between the sample and reference positions of the sensor is measured. This temperature difference is assumed to be proportional to the heat flow to the sample.

Power compensation DSCs include a sample and a reference holder installed in a constant temperature enclosure. Each of the holders has a heater and a temperature sensor. The average of the sample and reference holder temperatures is used to control temperature, which follows the desired temperature program. In addition, differential power proportional to the temperature difference between the holders is added to the average power to the sample holder and subtracted from the average power to the reference holder in an effort to reduce the temperature difference between sample and reference holders to zero. The differential power is assumed to be proportional to the sample heat flow and is obtained by measuring the temperature difference between the sample and reference holder. In commercial power compensation DSCs, the difference between sample and reference temperature is generally not zero because a proportional controller is used to control the differential power.

For both heat flux and power compensation DSCs, sample to be analyzed is loaded into a pan and placed on the sample position of the DSC. An inert reference material may be loaded into a pan and placed on the reference position of the DSC, although usually the reference pan is empty. The temperature program for conventional DSCs typically includes combinations of linear temperature ramps and constant temperature segments. Modulated DSC uses a temperature program in which periodic temperature oscillations are superposed on linear ramps and isothermal segments. The experimental result is the sample heat flow versus temperature or time. The heat flow signal is the result of heat flow to or from the sample due to its specific heat and as a result of transitions occurring in the sample.

During the dynamic portion of the DSC experiment, a temperature difference is created between the sample and reference positions of the DSC. In heat flux DSCs, the temperature difference results from the combination of three differential heat flows: the difference between the sample and reference heat flow, the difference between sample and reference sensor heat flow and the difference between sample and reference pan heat flow. In power compensation DSCs, the temperature difference results from the combination of three differential heat flows plus the differential power supplied to the sample holders: the difference between the sample and reference heat flow, the difference between sample and reference holder heat flow and the difference between sample and reference pan heat flow. The heat flow difference between the sample and reference consists of heat flow due to the heat capacity difference between the sample and reference, the heat flow of a transition, or the difference in heating rate that occurs during an MDSC experiment. The heat flow difference between the sample and reference sections of the DSC is the result of thermal resistance and capacitance imbalances in the sensor or between the holders and the difference in heating rate that occurs between the sample and reference sections of the DSC during a transition or during an MDSC experiment. Similarly, the heat flow difference between the sample and reference pans is the result of mass differences between the pans and the difference in heating rate that occurs during a sample transition or during a MDSC experiment.

In conventional heat flux DSCs the sensor imbalance and pan imbalance are assumed to be insignificant and the differences in heating rates are ignored. In conventional power compensation DSCs the holder imbalance and pan imbalance are assumed to be insignificant and the differences in heating rates are ignored. When the balance assumptions are satisfied and the sample heating rate is the same as the programmed heating rate, the temperature difference is proportional to the sample heat flow and the differential temperature gives an accurate measure of the sample heat flow. The sample heat flow is only proportional to the measured temperature difference between sample and reference when the heating rate of the sample and reference are identical, the sensor is perfectly symmetrical, and the pan masses are identical. Proportionality of sample heat flow to temperature difference for a balanced sensor and pans occurs only during portions of the experiment when the instrument is operating at a constant heating rate, the sample is changing temperature at the same rate as the instrument and there are no transitions occurring in the sample. During Modulated DSC experiments, the heating rates of the sample and reference are generally not the same and the difference between measured sample and reference temperatures is not proportional to the sample heat flow.

Thus, the sample heat flow from a conventional DSC is not the actual sample heat flow, but includes the effects of imbalances and differences in heating rates; in other words the DSC sample heat flow measurement is smeared. For

many DSC experiments, the smeared sample heat flow is a sufficiently accurate result. For example, when the desired experimental result is the total energy of the transition, such as the heat of fusion of a melt, the total peak area is integrated over a suitable baseline and the result from a conventional DSC is sufficiently accurate. If however, partial integration of the peak area is required (for example, in the study of reaction kinetics), the smeared sample heat flow of conventional DSC cannot be used. Another example of when the conventional DSC result is inadequate is when two or more transitions in a sample occur within a small temperature interval. In that case, the transitions may be poorly separated in prior art DSCs because of the smearing effects. The improvement in resolution of the present invention greatly improves the separation of closely spaced transitions. In any case, the heat flow signal from prior art DSCs does not accurately portray the sample heat flow during a transition.

During a transition, the heat flow to the sample increases or decreases from the pre-transition value depending upon whether the transition is exothermic or endothermic and whether the DSC is being heated or cooled. The change in sample heat flow causes the heating rate of the sample to be different from that of the DSC and as a consequence, the sample pan and sensor heating rates become different from the programmed heating rate.

## Heat Flux DSCs

Figure 1 shows a thermal network model that may be used to represent heat flux in certain heat flux DSC sensors. To is the temperature at the base of the sensor near its connection to the oven, $T_s$ is the temperature of the sample position of the sensor and $T_r$ is the temperature of the reference position of the sensor. $R_s$ and $R_r$ represent the thermal resistance between the base of the sensor and the sample and reference positions, respectively. $C_s$ and $C_r$ represent the thermal capacitance of the sample and reference portions of the sensor. Thermal capacitance is the product of mass and specific heat and is a measure of the heat storage capacity of a body, *i.e.,* it is the heat capacity of the body. The heat flow to the sample and the reference are $q_s$ and $q_r$, respectively. It should be understood that $q_s$ and $q_r$ include heat flow to sample and reference pans. During the execution of a thermal program the base temperature of the sensor $T_o$ follows the thermal program. The temperatures at the sample and reference positions, $T_s$ and $T_r$, lag the base temperature To due to heat flowing to the sample and to the reference and heat which is stored within the sensor in sensor sample thermal capacitance $C_s$ and sensor reference thermal capacitance $C_r$.
Performing a heat flow balance on the sample side of the sensor yields a heat flow

$$q_s = \frac{T_0 - T_s}{R_s} - C_s \cdot \frac{dT_s}{d\tau}$$

through the sensor sample thermal resistance $R_s$ minus the heat stored in $C_s$. Similarly, a heat balance on the reference side of the sensor gives

$$q_r = \frac{T_0 - T_r}{R_r} - C_r \cdot \frac{dT_r}{d\tau}$$

through sensor reference thermal resistance $R_r$ minus the heat stored in $C_r$. In the equations herein, $\tau$ represents time.
The desired quantity (the differential heat flow to the sample with respect to the reference) is the difference between the sample and reference heat flows:

$$q = q_s - q_r$$

Substituting for $q_s$ and $q_r$ yields:

$$q = \frac{T_0 - T_s}{R_s} - C_s \cdot \frac{dT_s}{d\tau} - \frac{T_0 T_r}{R_r} + C_r \cdot \frac{dT_r}{d\tau}$$

Substituting the following expressions for two temperature differences in a differential scanning calorimeter,

$$\Delta T = T_s - T_r$$

$$\Delta T_0 = T_0 - T_s$$

where $\Delta T$ is the temperature difference between the sample and the reference and $\Delta T_0$ is the temperature difference between the sample and a position at the base of the sensor, results in the DSC heat flow equation:

$$q = \Delta T_0 \cdot \left(\frac{R_r - R_s}{R_r \cdot R_s}\right) - \frac{\Delta T}{R_r} + (C_r - C_s) \cdot \frac{dT_s}{d\tau} - C_r \cdot \frac{d\Delta T}{d\tau}$$

For heat flux DSCs, the DSC heat flow equation has 4 terms. The first term accounts for the effect of the difference between the sensor sample thermal resistance and the sensor reference thermal resistance. The second term is the conventional DSC heat flow. The third term accounts for the effect of the difference between the sensor sample thermal capacitance and the sensor reference thermal capacitance. The fourth term accounts for the effect of the difference between the heating rates of the sample and reference sides of the DSC. Conventionally, when this equation is applied to the DSC heat flow, the first and third terms are zero because $R_s$ and $R_r$ are assumed to be equal and $C_s$ and $C_r$ are also assumed to be equal.

In reality, because of imprecision in the manufacturing process, sensors are not perfectly balanced. This imbalance contributes to baseline heat flow deviations that may be significant. The first and third terms of the four-term heat flow equation account for the thermal resistance and thermal capacitance imbalances, respectively. The fourth term is generally very nearly equal to zero, except when a transition is occurring in the sample (for instance, during a melt), or during a Modulated DSC experiment. Usually, the heat flow signal is integrated over the area of the transition to obtain the total energy of the transition. Because the fourth term does not contribute to the area of the integration, it has been ignored in the prior art. However, it may contribute significantly to the shape of the heat flow curve during a transition. Therefore, including the fourth term improves the dynamic response of the heat flow curve. Also, as noted by Hohne, et. al. in "Differential Scanning Calorimetry: An Introduction for Practitioners," (Springer-Verlag, 1996), the fourth term cannot be ignored and must be taken into account when partial integration of the transition peak is performed, *e.g.*, in kinetic investigations for purity determinations. When the fourth term is included, the onset of a transition is sharper and the return to baseline heat flow when the transition is over is more rapid.

Because the resolution of a DSC is its ability to separate transitions that occur in a sample within a small temperature interval, and this is determined essentially by how quickly the heat flow signal returns to baseline after a transition is complete, including the fourth term of the DSC heat flow equation improves the resolution of the DSC sensor by increasing the return to baseline of the heat flow signal after a transition is complete.

The four-term heat flow equation for heat flux DSCs has long been known in the art of differential scanning calorimetry. It can only be applied to heat flux DSC sensors that satisfy certain criteria. The structure of the sensor must be such that the thermal network model correctly represents the dynamic thermal behavior of sensor. Ideally, the sample and reference portions of the sensor should be absolutely independent, *i.e.,* a transition that occurs on the sample side would not have any effect on the reference temperature. Typically, heat flux DSC sensors of the disk type as disclosed in US-A-4,095,453 US-A-4,350,446 US-A-5,033,866 and US-A- 5,288,147 cannot use the four-term heat flow equation, because the sample and reference temperature are not independent, and because the four-term heat flow equation does not accurately represent the dynamic thermal behavior of those sensors.

A quantitative measure of the independence of prior art heat flux sensors can be obtained by a simple experiment: for example, if a sample of indium is placed on the reference position of a prior art sensor such as, for example, the type disclosed in US-A-4,095,453 to Woo, and the sample is heated through the melt, in one exemplary experiment the deviation of the temperature of the sample position observed was observed to be 13.4% of the deviation that would have been obtained if the indium sample had been placed on the sample position. In an ideal instrument, that deviation would have been zero.

US-A- 5,599,104 discloses a heat flux DSC sensor that uses two temperature difference measurements. However, these measurements are applied in a different manner using a different heat flow equation and the configuration of the differential temperature measurements is not suitable for use with the four-term heat flow equation. Specifically, US-A-5,599,104 cannot use the four-term equation because the two temperature differences measured are not suitable for use in the four-term DSC the equation.

US-A-5,599,104 also discloses to use an absolute temperature sensor that is installed in the furnace to control temperature. The sample temperature however, cannot be used to control temperature of the calorimeter since its

temperature reflects the sample temperature which may be affected by reactions or transitions occurring in the sample.

**Power Compensation DSCs**

Figure 2 shows a thermal network model that may be used to represent certain configurations of power compensation DSCs. $T_0$ is the temperature of the isothermal enclosure surrounding the sample holders, $T_s$ is the temperature of the sample holder and $T_r$ is the temperature of the reference holder. $R_s$ and $R_r$ represent the thermal resistance of the sample and reference portions of the calorimeter, respectively. $C_s$ and $C_r$ represent the thermal capacitance of the sample and reference portions of the calorimeter, respectively. Thermal capacitance is the product of mass and specific heat and is a measure of the heat storage capacity of a body. The heat flow to the sample and the heat flow to the reference and their pans are represented by $q_s$ and $q_r$, respectively. The power supplied to the sample and the power supplied to the reference holders are represented by $p_s$ and $p_r$, respectively. During the execution of a thermal program the temperature of the isothermal enclosure $T_o$ is constant. Sample and reference powers $p_s$ and $p_r$ are applied to the sample and reference holders to maintain the average heating rate and to control the difference in temperature between the sample and reference holders. Performing a heat balance on the sample holder yields:

$$q_s = \frac{T_0 - T_s}{R_s} + p_s - C_s \cdot \frac{dT_s}{d_\tau} \qquad (1)$$

Similarly, a heat balance on the reference holder gives,

$$q_r = \frac{T_0 - T_r}{R_r} + p_r - C_r \cdot \frac{dT_r}{d_\tau} \qquad (2)$$

The desired quantity is the difference between the sample and reference heat flows:

$$q = q_s - q_r \qquad (3)$$

Substituting for $q_s$ and $q_r$ yields:

$$q = p_s - p_r + \frac{T_0 - T_s}{R_s} - \frac{T_0 - T_r}{R_r} - C_s \cdot \frac{dT_s}{d_\tau} + C_r \cdot \frac{dT_r}{d_\tau} \qquad (4)$$

Substitute the following expressions into the heat flow equation:

$$\Delta T = T_s - T_r \qquad \Delta T_0 = T_0 - T_s \qquad \Delta p = p_s - p_r \qquad (5)$$

The result is the five-term power compensation DSC heat flow equation:

$$q = \Delta p + \Delta T_0 \cdot \left( \frac{R_r - R_s}{R_r \cdot R_s} \right) - \frac{\Delta T}{R_r} + \left( C_r - C_s \right) \cdot \frac{dT_s}{d_\tau} - C_r \cdot \frac{d\Delta T}{d_\tau} \qquad (6)$$

The first term in this equation is the difference in power supplied to the sample positions versus the power supplied to the reference position. The second term accounts for differences between the thermal resistances of the sample and reference holders. The third term accounts for the heat flow that results from the difference in temperature between the sample and reference. The fourth term is the heat flow resulting from imbalances in thermal capacitance between the sample and reference holders. The fifth term reflects heat flow resulting from differences in heating rate between the sample and reference holders. In the prior art, this equation is not used; instead a very simplified equation is used:

$$q = K \cdot \Delta T \qquad (7)$$

where *K* is a temperature dependent proportionality factor. This equation does not include the effects of imbalances between the sample and reference holders (the second and fourth terms in the heat flow equation), nor does it include the fifth term which expresses the differences in heating rate between the sample and reference holders. In essence, in the prior art it is assumed that the DSC is perfectly balanced, *i.e.*, that $R_s = R_r$ and that $C_s = C_r$. In reality, because of manufacturing imprecision and the variability of the heat exchange processes between the sample holder and the isothermal enclosure and between the reference holder and the isothermal enclosure, imbalances generally exist. These imbalances contribute to baseline heat flow deviations that may be significant.

The fifth term is generally very nearly equal to zero, except when a transition is occurring in the sample, for instance during a melt. Usually the transition heat flow signal is integrated over a suitable baseline to obtain the total energy of the transition. Because the integral of the fifth term over the transition is zero, it is conventionally ignored in the prior art. However, it may contribute significantly to the shape of the heat flow curve during a transition. Thus, by including the fifth term, the dynamic response of the instrument is improved. Also, as noted by Höhne et. al., referenced above, this term must be taken into account when a partial integration of the transition peak is performed (for instance when kinetic investigations to determine purity are undertaken). When the fifth term is included, the return to baseline after the completion of a transition is more rapid. Because the resolution of a DSC is its ability to separate transitions that occur in a sample within a small temperature interval, and that ability is determined solely by how quickly the heat flow signal decays after a transition is complete, including the fifth term of the DSC heat flow equation improves the resolution of the DSC by increasing the rate of decay of the heat flow signal after a transition is completed.

## SUMMARY OF THE INVENTION

The present invention can be applied to either heat flux or power compensation DSCs that can independently measure the sample and reference heat flows, and that account for differences in heating rate between the sample and reference pans and the difference in heating rate between the sample and reference (if a reference is used). Figures 1 and 2 are schematic diagrams of thermal network models for heat flux DSCs and power compensation DSCs, respectively.

The invention is defined in claims 1 and 45.

## HEAT FLUX DSCs

As applied to heat flux DSCs, the present invention measures the differential heat flow to the sample based upon a single absolute temperature measurement and two differential temperature measurements. Differential scanning calorimeters of the present invention have substantially improved resolution over conventional instruments, with an empty-cell heat flow that is much closer to zero than that obtained in conventional instruments.

### Temperature Measurements

In the present invention, the differential heat flow to the sample with respect to the reference is calculated from measurements of the absolute temperature of the base of the sensor, the differential temperature between the sample position and the base of the sensor, and the differential temperature between the sample and reference positions. The differential temperatures are measured using a sample temperature detector (e.g., a sample area temperature detector), a reference temperature detector (e.g., a reference area temperature detector) and a base temperature detector.

The base temperature detector (which measures the temperature of the base of the sensor near its connection to the oven) is used to control the oven temperature. The sample temperature is measured by measuring the difference between the sample temperature and the base temperature, and subtracting that difference from the base temperature to obtain the sample temperature, *i.e.,* the sample temperature is obtained from $T_s = T_0 - \Delta T_0$. By making a single absolute temperature measurement To, and a differential temperature measurement between the base and sample positions, any relative errors in absolute temperature measurements due to differences in temperature sensors are eliminated. Also, this structure minimizes the drift of sample temperature during isothermal segments. The heat flow signal that results from this structure has improved baseline performance and improved dynamic response. Additionally, because the heat flow signal is greater during a transition, the calorimeter has greater sensitivity.

The sensor constructed according to the present invention exhibits improved independence between the sample and reference positions. For example, whereas in a prior art heat flux instrument, a deviation in the temperature of the sample position of 13.4% was observed when a sample of indium is placed on the reference position and heated through the melt, in an exemplary experiment with the present invention that deviation is only about 1.4%. *i.e.,* the present invention exhibits an improvement by about an order of magnitude over the prior art instruments. Thus sensors constructed according to the present invention are "effectively independent," because they exhibit a temperature deviation at the sample position when an indium sample is placed on the reference position of less than about 1.5% of the temperature deviation at the sample position when an indium sample is placed on the sample position.

## Calibration

the differential scanning calorimeter of the present invention can be calibrated by running two separate experiments. These experiments determine the four sensor thermal parameters, $C_s$ (the sensor sample thermal capacitance), $C_r$ (the sensor reference thermal capacitance), $R_s$ (the sensor sample thermal resistance) and $R_r$ (the sensor reference thermal resistance) experimentally, and thus calibrate the heat flow sensor.

The first experiment is performed with an empty DSC cell. The DSC cell is first held at an isothermal temperature that is below the temperature range of the calibration, for a time segment sufficient to ensure complete equilibration of the sensor. The DSC cell is then heated at a constant heating rate to a temperature above the temperature range of the calibration, and then held at that temperature for another isothermal segment, for a time segment sufficient to ensure equilibration of the sensor at that temperature. This first experiment is used to calculate the sample and reference time constants as a function of temperature over the calibrated temperature range.

The heat flow balance equation for the sample side of the sensor is:

$$q_s = \frac{T_0 - T_s}{R_s} - C_s \cdot \frac{dT_s}{d\tau}$$

where $\tau$ represents time, $q_s$ is the heat flow to the sample and the sample pan, $R_s$ is the sensor sample thermal resistance, and $C_s$ is the sensor sample thermal capacitance. Similarly, the heat balance equation on the reference side of the sensor is:

$$q_r = \frac{T_0 - T_r}{R_r} - C_r \cdot \frac{dT_r}{d\tau}$$

where $q_r$ is the heat flow to the reference and the reference pan, $R_r$ is the sensor reference thermal resistance, and $C_r$ is the sensor reference thermal capacitance.

The heat flow to the sample and the heat flow to the reference should be zero (since the DSC cell is empty). Accordingly, if $q_s$ and $q_r$ are set equal to zero in the heat balance equations for the sample and reference sides of the sensor, the time constants for the sample and reference are given by:

$$\tau_s = C_s R_s = \frac{\Delta T_0}{\left(\frac{dT_s}{d\tau}\right)}$$

and

$$\tau_r = C_r R_r = \frac{\Delta T_0 + \Delta T}{\frac{dT_s}{d\tau} - \frac{d\Delta T}{d\tau}}$$

respectively, where $\Delta T_0$ = To - $T_S$ and $\Delta T = T_s - T_r$. These results are stored as a function of temperature.

The second experiment uses a pair of calibration samples without pans. The calibration samples may have the same mass, or may have different masses. Preferably, the calibration samples are sapphire samples (*e.g.*, monocrystalline sapphire disks), preferably weighing 25 mg or more. Other reference materials with well-known specific heats and no transitions in the temperature range of the calibration may be used instead of sapphire (in which case $C_{sapph}$ would be replaced in the following equations by $C_{mat}$ where $C_{mat}$ is the specific heat of the other reference material).

The sample and reference heat flows from the heat balance equations are set as follows:

$$q_s = m_s \cdot C_{sapph} \cdot \frac{dT_{ss}}{d\tau}$$

$$q_r = m_r \cdot C_{sapph} \cdot \frac{dT_{rs}}{d\tau}$$

where $m_s$, $m_r$ are the masses of the sample and reference sapphires, respectively, $C_{sapph}$ is the specific heat of sapphire and $T_{ss}$ and $T_{rs}$ are the temperatures of the sample and reference sapphire.

Assume:

$$\frac{dT_{ss}}{d\tau} = \frac{dT_s}{d\tau} \quad \text{and} \quad \frac{dT_{rs}}{d\tau} = \frac{dT_r}{d\tau}$$

Substituting for $q_s$ and $T_{ss}$ in the sample heat balance equation and solving for the sensor sample thermal capacitance $C_s$:

$$C_s = \frac{m_s \cdot Csapph}{\dfrac{\Delta T_0}{\left(\dfrac{dT_s}{d\tau}\right) \cdot \tau_s} - 1}$$

Substituting for $q_r$ and $T_{rs}$ in the reference heat balance equation and solving for the sensor reference thermal capacitance $C_r$:

$$C_r = \frac{m_r \cdot C_{sapph}}{\dfrac{\Delta T_0 + \Delta T}{\left(\dfrac{dT_s}{d\tau} - \dfrac{d\Delta T}{d\tau}\right) \cdot \tau_r} - 1}$$

The results from the second experiment using sapphire (or another well-known calibration material) using the time constants for DSC cell obtained in the first experiment are then used to calculate the sample and reference sensor heat capacities as a function of temperature. Finally, the sensor sample and reference thermal resistances are calculated from the time constants and the sensor thermal capacitances:

$$R_s = \frac{\tau_s}{C_s} \quad \text{and} \quad R_r = \frac{\tau_r}{C_r}$$

A second calibration procedure is similar to the first one, but uses sapphire (or another material with a well-known heat capacity and no transitions in the temperature range of interest) calibration samples in both the first and the second calibration experiments. The calibration equations and their derivation for this procedure are described below.

**POWER COMPENSATION DSCs**

As applied to power compensation differential scanning calorimeters, the present invention uses differential temperature measurements, a single temperature measurement, a differential power measurement, and a five term heat flow equation to model the instrument. The present invention is also a method by which the thermal parameters required to apply the five term heat flow equation are determined. Differential scanning calorimeters employing this invention will have empty DSC cell heat flow that is much closer to zero (leading to improved baselines) and will have substantially improved resolution over conventional instruments.

In a preferred embodiment, the two differential temperature measurements are the differential temperature $\Delta T_0$ across thermal resistance $R_s$, and the differential temperature $\Delta T$ between the sample and reference holders. The absolute temperature of the sample holder and the power difference between the sample and reference holders are also measured (i.e., the differential power to the sample with respect to the reference). Additionally, the four thermal parameters, $R_s$, $R_r$, $C_s$ and $C_r$ must be known. The use of two differential temperature measurements allows the use of a heat flow model that includes all five terms of the five term heat flow equation. The heat flow signal that results has

improved baseline performance and improved dynamic response. Additionally, because the heat flow signal is greater during a transition, the calorimeter has greater sensitivity.

Other choices of the two differential temperature measurements are also suitable, as explained bellow.

A method can be applied by which the four thermal parameters $C_s$, $C_r$, $R_s$, $R_r$ are determined. This determination constitutes heat flow calibration of the DSC.

Heat flow calibration requires two experiments from which the four thermal parameters can be calculated. The first experiment is performed with an empty DSC cell. The DSC program begins with an isothermal temperature segment at a temperature below the lowest temperature of the desired calibration range, followed by a constant heating rate temperature ramp, and ending with an isothermal temperature segment above the highest temperature of the desired calibration range. The heating rate should be the same as the heating rate that is to be used for subsequent experiments. The second calibration experiment is performed with sapphire samples without pans, in both the sample and reference holders. The same thermal program is used for the second experiment as was used for the first (empty DSC) experiment. The two calibration experiments and the calculation of the thermal parameters based on the experiments are explained in detail below.

## IMPROVED CALCULATION

The present invention comprises an improved method for calculating sample heat flow in a differential scanning calorimeter that can be used with both heat flux and power compensation DSCs.

Differential scanning calorimeters employing the improved calculation of the present invention furnish a sample heat flow signal that is a substantially more accurate representation of the sample heat flow during the entire DSC experiment, essentially free of the smearing effects that are present in conventional DSC. Accordingly, DSCs using the present invention will have greatly improved resolution. For example, kinetic analysis requiring partial integration of peak areas can be practiced using the present invention whereas partial integration is of limited use with conventional DSCs, due to the distortions of the sample heat flow signal.

The result is a more accurate measurement of the sample heat flow during transitions in which the heating rate of the sample differs from that of the reference. Resolution is improved because the return to baseline of the heat flow signal at the completion of a transformation is much more rapid.

## BRIEF DESCRIPTION OF THE FIGURES

Figure 1 is a thermal network model of a heat flux differential scanning calorimeter.

Figure 1a is a schematic diagram of a heat flux DSC sensor of an embodiment of the present invention.

Figure 1b is a cross sectional view of an embodiment of the sensor shown in Figure 1a.

Figure 1c is an electrical schematic showing how the thermocouples shown in Figures 1a and 1b are used to measure the absolute and differential temperatures in the present invention.

Figure 1d is a schematic diagram of a cross-section of the DSC cell assembly for a preferred embodiment of the present invention.

Figure 2 is a thermal network model of a power compensation differential scanning calorimeter.

Figure 2a is a schematic diagram of a power compensation DSC which is not part of the present invention.

Figure 3 is a plot showing a comparison of the heat flow obtained according to the present invention using the improved calculation described below (curve 3) to the heat flow obtained using conventional DSCs (curve 1), and to the heat flow obtained using the present invention without the improved calculation (curve 2).

Figure 4 is a plot showing the temperatures of the sample, sample pan, and sample sensor during the onset of a melt in the present invention.

## DETAILED DESCRIPTION OF THE INVENTION

### HEAT FLUX DSCs

#### Temperature Measurements

Figure 1 a is a schematic diagram of an overall view of a preferred embodiment of a heat flux DSC sensor according to the present invention. The sample is loaded in a pan and placed on the sample platform 1. Sample platform 1 is a thin flat circular disk that is attached to the thin wall cylindrical tube 2, which is also joined to the base 3. The reference is loaded in a pan placed on the reference platform 4. Reference platform 4 is a thin flat circular disk that is

attached to thin wall cylindrical tube 5, which is also joined to the base 3. The platforms, tubes and base (items 1 through 5) are integral parts of the sensor body 6 which is made of constantan, the negative element of a type E thermocouple. The thin wall tube portions 2 and 5 of the sensor body are the principal contributors to the thermal resistances $R_s$ and $R_r$ of the DSC sensor. The underside of the base 7 is a flat surface. This surface is the mounting surface of the sensor used to install the sensor in the DSC oven.

A typical sample thin wall cylindrical tube 2 and reference thin wall cylindrical tube 5 have a height of 2.3mm (0.09 inches), a diameter of 4.75mm (0.187 inches) and a wall thickness of 0.13mm (0.005 inches) The sample platform thickness is also 0.13mm (0.005 inches) Thus the cross sectional area of the tube itself (*i.e.,* the tube's circumference times its thickness) is about 1.83mm$^2$ (0.00284 square inches) such that the aspect ratio (the ratio of the height of the cylinder to its cross-sectional area) is about 1.24mm$^{-1}$ (31.5 inches). The aspect ratio should preferably range from 9.8m 13,8 (25 to 35), in order to obtain both good resolution and good sensitivity. The sensor's sensitivity may be increased (at a cost to its resolution), by increasing the height of the cylinder, to, for example, 7.6-12.7mm (0.3-0.5 inches). Alternatively, the sensor's resolution may be increased (at a cost to its sensitivity), by reducing the cylinder height to, for example, 0.51-1.02mm (0.02 to 0.04 inches).

Figure 1b is a schematic diagram of a cross sectional view through the DSC sensor, taken at a plane perpendicular to and passing through the centers of the sample and reference platforms. A sample area temperature detector 8 is welded concentrically to the underside of the sample platform 1. The area temperature detector is a thin circular disk of chromel that is the thermoelectrically positive element of a type E thermocouple. At the center is a depressed portion to which a chromel wire 9 is welded. The sample area temperature detector 8 is welded to the underside of the sample platform 1 at sixteen places equally spaced in a circular pattern concentric to the sample area detector 8 and sample platform 1, thus forming sixteen thermoelectric junctions in parallel between the constantan sample platform 1 and the sample area temperature detector 8.

A reference area temperature detector 10 is welded concentrically to the underside of the reference platform 4. The reference area temperature detector 10 is a thin circular disk of chromel that is the thermoelectrically positive element of a type E thermocouple. At the center is a depressed portion to which a chromel wire 11 is welded. The reference area temperature detector 10 is welded to the underside of the reference platform 4 at sixteen places equally spaced in a circular pattern concentric to the reference area temperature detector 10 and reference platform 4, thus forming sixteen thermoelectric junctions in parallel between the constantan reference platform 4 and the reference area temperature detector 10. A type E thermocouple 12 is welded to the center of the top surface of the base 3. Lead wire 13 is the chromel and lead wire 14 is the constantan element of the type E thermocouple.

Figure 1c is a schematic representation of the thermocouple configuration, showing how the voltages representing $\Delta T_0$, $T_s$ and $\Delta T$ are measured. The (+) signs indicate the chromel leads and the area detectors. The (-) signs indicate the constantan sensor body and the constantan lead. As shown in Figure 1c, the voltage representing the differential temperature $\Delta T$ between the sample and the reference is measured between chromel lead wire 9 and chromel lead wire 11. The voltage representing the differential temperature $\Delta T_0$ between the sample and the base is measured between chromel lead wires 9 and 13. The six parallel thermocouple junctions between area detectors 8 and 10 and sample and reference platforms 1 and 4, respectively, allow the measurement of the difference between the average temperatures of the sample and reference platforms as described in US-A- 4,095,453, which is incorporated by reference herein. Area detector 8 also allows measurement of the difference between the average temperature of the sample platform and the temperature at the base of the sensor. The area detectors and associated parallel thermocouples reduce the sensitivity of the $\Delta T$ and $\Delta T_0$ measurements to any variations in the position of the pans upon the sensor, as well as the sensitivity due to variations in the contact resistance between the pan and the sensor. Type E thermocouple 12 is used to measure $T_0$, the temperature at the base of the sensor. As shown in Figure 1c, the voltage representing this temperature appears between lead wires 13 and 14. The sample temperature representing $T_s$ is obtained by combining voltages representing $T_0$ and $\Delta T_0$ to obtain the voltage representing $T_s$ that would appear between lead wires 9 and 14. While the preferred embodiment discloses a structure using combinations of the thermoelectric materials constantan and chromel, one of ordinary skill in the art would recognize that other thermocouple materials could be used to make the same measurements and achieve the same results.

Those skilled in the art would also recognize that there are numerous other configurations whereby a single temperature measurement and two differential measurements could be used with a slightly different four-term heat flow equation to obtain the same result. There are three possible choices for the temperature measurement: the sample platform temperature $T_s$, the reference platform temperature $T_r$ and the sensor base temperature To. Each of these can be used with any two of the three differential temperature measurements to achieve the same result. In the invention, the base temperature $T_0$ is used for the absolute temperature measurement, with differential temperature measurements $T_0$ -$T_s$ and $T_s$-$T_r$. The base temperature $T_o$ could also be used with differential measurements $T_0$-$T_s$ and $T_0$-$T_r$ or with $T_s$-$T_r$ and To -$T_r$. The reference temperature $T_r$ can be used as the absolute temperature measurement with differential temperature measurements $T_s$-$T_r$ and To -$T_r$ or with $T_0$-$T_r$ and $T_0$-$T_s$ or with $T_s$-$T_r$ and $T_0$-$T_s$. The sample temperature $T_s$ can be used as the absolute temperature measurement with $T_0$-$T_s$ and $T_s$-$T_r$, or with $T_0$-$T_s$ and $T_0$-$T_r$ or with $T_0$-$T_r$

and $T_s$-$T_r$. Thus, there are eight additional configurations that could give the same information if the four-term heat flow equation is rewritten accordingly.

**First Preferred Method for Determining Sensor Thermal Parameters**

The sensor is calibrated prior to use. The sensor is calibrated by determining the values of sensor thermal parameters $C_s$, $C_r$, $R_s$ and $R_r$.

As described above, the sensor can be calibrated by performing two sequential measurements, the first with an empty DSC cell, and the second with a sapphire sample in the sample position and another sapphire sample in the reference position. Preferably, the sapphire samples should each weigh at least 25 mg.

As described above, for the first calibration experiment a thermal program starting with an isothermal temperature segment at a temperature below the calibration range, followed by a constant heating rate temperature ramp, and ending with an isothermal segment above the calibration range is applied to the empty DSC cell. Preferably, the beating rate used during calibration should be the same as that used for subsequent experiments. Preferably, the temperature range of the calibration equals or exceeds the temperature range of the subsequent experiments. The sample time constant as a function of temperature is then given by:

$$\tau_s = C_s R_s = \frac{\Delta T_0}{\left(\frac{dT_s}{d\tau}\right)}$$

and the reference time constant is given by:

$$\tau_r = C_r R_r = \frac{\Delta T_0 + \Delta T}{\frac{dT_s}{d\tau} - \frac{d\Delta T}{d\tau}}$$

The results from the empty DSC experiment are used to calculate and store the time constants as a function of sample temperature.

As described above, for the second calibration experiment, a pair of sapphire calibration samples is placed on the sample and reference positions of the sensor. The thermal program that was used for the empty DSC experiment is then applied to the DSC cell.

As shown above, the sensor sample thermal capacitance is given by:

$$C_s = \frac{m_s \cdot C_{sapph}}{\frac{\Delta T_0}{\left(\frac{dT_s}{d\tau}\right) \cdot \tau_s} - 1}$$

and the sensor reference thermal capacitance is given by:

$$C_r = \frac{m_r \cdot C_{sapph}}{\frac{\Delta T_0 + \Delta T}{\left(\frac{dT_s}{d\tau} - \frac{d\Delta T}{d\tau}\right) \cdot \tau_r} - 1}$$

These equations are used with the time constants from the empty DSC cell experiments to calculate the sample and reference sensor heat capacities as a function of temperature. Finally, the sensor thermal resistances are computed from the time constants and sensor thermal capacitances:

$$R_s = \frac{\tau_s}{C_s} \quad \text{and} \quad R_r = \frac{\tau_r}{C_r}$$

The thermal capacitances and resistances are used in the DSC heat flow calculation either as tabular data that are interpolated between points or the data may be fitted with a polynomial. Generally, the thermal capacitance and resistance data are smooth and well behaved so that a low order polynomial fit gives sufficient precision.

**Second Preferred Method for Determining Sensor Parameters**

A second preferred method for calibrating the DSC sensor is to perform two sequential DSC scans with samples in both scans, using, e.g., sapphire samples. The sample masses on both sample and reference sides must be different for the two scans.

As for the first embodiment, we assume the heating rates of the samples are the same as the heating rates of the sample and reference sides of the sensor.

For the sample side, the heat flows are given by:

$$q_{s1} = m_{s1} \cdot C_{sapph} \cdot \frac{dT_{s1}}{d\tau}$$

$$q_{s2} = m_{s2} \cdot C_{sapph} \cdot \frac{dT_{s2}}{d\tau}$$

The numeric subscripts indicate scans 1 and 2.

The heat balance equation for the sample side for scans 1 and 2 are then:

$$q_{s1} = \frac{\Delta T_{01}}{R_s} - C_s \cdot \frac{dT_{s1}}{d\tau}$$

$$q_{s2} = \frac{\Delta T_{02}}{R_s} - C_s \cdot \frac{dT_{s2}}{d\tau}$$

Solving the heat balance equations simultaneously gives,

$$C_s = \frac{\Delta T_{01} \cdot q_{s2} - \Delta T_{02} \cdot q_{s1}}{\Delta T_{02} \frac{dT_{s1}}{d\tau} - \Delta T_{01} \frac{dT_{s2}}{d\tau}}$$

$$R_s = \frac{\Delta T_{02} \cdot \frac{dT_{s1}}{d\tau} - \Delta T_{01} \cdot \frac{dT_{s2}}{d\tau}}{q_{s2} \cdot \frac{dT_{s1}}{d\tau} - q_{s1} \cdot \frac{dT_{s2}}{d\tau}}$$

For the reference side:

$$q_{r1} = m_{r1} \cdot C_{sapph} \cdot \frac{dT_{r1}}{d\tau}$$

$$q_{r2} = m_{r2} \cdot C_{sapph} \cdot \frac{dT_{r2}}{d\tau}$$

The heat balance equations for the reference side for samples 1 and 2 are:

$$q_{r1} = \frac{T_{01} - T_{r1}}{R_r} - C_r \cdot \frac{dT_{r1}}{d\tau}$$

$$q_{r2} = \frac{T_{02} - T_{r2}}{R_r} - C_r \cdot \frac{dT_{r2}}{d\tau}$$

Substituting as above:

$$q_{r1} = \frac{\Delta T_{01} + \Delta T_1}{R_r} - C_r \cdot \left( \frac{dT_{s1}}{d\tau} - \frac{d\Delta T_1}{d\tau} \right)$$

$$q_{r2} = \frac{\Delta T_{02} + \Delta T_2}{R_r} - C_r \cdot \left( \frac{dT_{s2}}{d\tau} - \frac{d\Delta T_2}{d\tau} \right)$$

Solving simultaneously gives:

$$R_r = \frac{(\Delta T_{02} + \Delta T_2) \cdot \left( \frac{dT_{s1}}{d\tau} - \frac{d\Delta T_1}{d\tau} \right) - (\Delta T_{01} + \Delta T_1) \cdot \left( \frac{dT_{s2}}{d\tau} - \frac{d\Delta T_2}{d\tau} \right)}{q_{r2} \cdot \left( \frac{dT_{s1}}{d\tau} - \frac{d\Delta T_1}{d\tau} \right) - q_{r1} \cdot \left( \frac{dT_{s2}}{d\tau} - \frac{d\Delta T_2}{d\tau} \right)}$$

$$C_r = \frac{(\Delta T_{01} + \Delta T_1) \cdot q_{r2} - (\Delta T_{02} + \Delta T_2) \cdot q_{r1}}{(\Delta T_{02} + \Delta T_2) \cdot \left( \frac{dT_{s1}}{d\tau} - \frac{d\Delta T_1}{d\tau} \right) - (\Delta T_{01} + \Delta T_1) \cdot \left( \frac{dT_{s2}}{d\tau} - \frac{d\Delta T_2}{d\tau} \right)}$$

Thus, using the results from two DSC scans with samples with different masses on both the sample and reference sides, the sensor thermal parameters can be computed. Note that one of the two calibration experiments may be performed with an empty DSC, in which case $m_s$ and $m_r$ are zero, and $q_s$ and $q_r$ are also zero (this actually reduces to the first preferred calibration method, *i.e.,* the first method is just a special case of the second method with $m_{s1} = m_{r1} = 0$).

## The DSC Enclosure

The DSC sensor measures the differential heat that flows through the DSC sensor between the sample platform and the DSC enclosure with respect to the heat that flows through the DSC sensor between the reference platform and the DSC enclosure. However, a small amount of heat flows directly between the sample and reference platforms and the DSC enclosure by heat conduction through the gas, by radiation exchange, and by convection.

Such extraneous heat flows between the sample and reference platforms and the enclosure are not measured and hence, especially to the extent that the extraneous heat flows from the sample platform are not balanced by the extraneous heat flows from the reference platform, contribute to errors in the differential heat flow measurement. The magnitude of this error depends upon the variation of temperature within the DSC enclosure. Increased uniformity of temperature within the enclosure reduces the overall extraneous heat flow generally, and also reduces the difference between the extraneous heat flow from the sample platform and the extraneous heat flow from the reference platform.

In particular, the lid of the DSC enclosure is an important contributor to non-uniformity within the enclosure, because it exchanges heat with the insulation surrounding the enclosure (which in turn exchanges heat with the DSC

cell surroundings) and because it has relatively poor thermal contact with the body of the enclosure (because it must be easily removed). Thus, the temperature of the lid may be substantially different from the temperature of the body of the enclosure, and this non-uniformity is responsible for the greatest portion of the extraneous heat flow.

In a preferred embodiment of the present invention, shown in Figure Id, non-uniformity within the DSC enclosure is greatly reduced by adding a second outer lid that encloses the first inner lid and contacts the body of the DSC enclosure. In this embodiment, heat is exchanged between the insulation surrounding the enclosure and the outer lid. This essentially eliminates heat flow through the DSC enclosure lid, greatly reducing the temperature difference between the body and the lid of the DSC enclosure and substantially reducing the extraneous heat flow.

Figure 1d is a schematic diagram of a cross section through the upper portion of the DSC cell assembly (the lower portion is omitted for clarity). The DSC sensor of the present invention 101 is mounted to the lower surface 102 of the body 103 of the DSC enclosure. Typically, the sensor is brazed to the enclosure to ensure that heat flows easily and uniformly between the sensor and the enclosure. The sample in a pan 104 is placed on the sensor sample position 105, a reference (if used) in a pan 106 is placed on the sensor reference position 107. Because the sample and reference pans are in direct contact with the DSC sensor, heat flows well between them and the sensor, guaranteeing that very nearly all heat flow to and from the sample and reference is through the sensor, and is therefore measured. The cavity 108 of the DSC enclosure is closed by inner lid 109. Cavity 108 is continuously purged with a purge gas, typically nitrogen (although other gases such as helium or argon may be used).

Because the body of the cavity is fabricated from a single piece of a very high thermal conductivity material (typically silver), its temperature is very uniform. Because inner lid 109 merely rests on surface 110 of enclosure body 103, heat exchange between inner lid 109 and enclosure body 103 is relatively poor. Outer lid 111 completely covers the inner lid 109 and also rests on enclosure body 103 on surface 112, such that inner lid 109 and outer lid 111 do not contact one another. Surrounding the entire upper portion of the DSC enclosure is a thermal insulation enclosure comprising body 113 and removable lid 114 that allows the inner and outer lids of the DSC enclosure to be removed for sample and reference loading and unloading.

Thus adding an outer lid to the DSC enclosure improves temperature uniformity within the DSC enclosure, and substantially reduces errors due to extraneous heat flow.

**Improved Calculation**

A heat flux DSC sensor according to the invention described above comprises independent sample and reference measuring sections that may be modeled using a thermal resistance and a thermal capacitance for each of the sample and reference sections as shown in Figure 1. Thermal resistance and capacitance elements are idealizations of the sensor, which allow simple mathematical expressions describing the thermal behavior of the sensor to be written. $R_s$ and $R_r$ are thermal resistances, $C_s$ and $C_r$ are thermal capacitances representing the sample and reference sections of the sensor. To, $T_s$ and $T_r$ are the temperatures of the sensor base, sample position and reference positions. The heat flow to the sample and its pan and to the reference and its pan are $q_s$ and $q_r$, respectively.

Performing a heat balance on the sample and reference gives the heat balance equations:

$$q_s = \frac{T_0 - T_s}{R_s} - C_s \cdot \frac{dT_s}{d\tau} \qquad q_r = \frac{T_0 - T_r}{R_r} - C_r \cdot \frac{dT_r}{d\tau}$$

In the preferred embodiment of the invention described above and in the ’949 application, the sensor base temperature To, the difference between the sensor base and sample position temperatures and the difference between the sample and reference position temperatures are measured. The differential temperatures are defined by:

$$\Delta T = T_s - T_r \qquad \Delta T_0 = T_0 - T_s$$

Substituting into the heat balance equations gives,

$$q_s = \frac{\Delta T_0}{R_s} - C_s \cdot \frac{dT_s}{d\tau} \quad \text{and} \quad q_r = \frac{\Delta T_0 + \Delta T}{R_r} - C_r \cdot \left( \frac{dT_s}{d\tau} - \frac{d\Delta T}{d\tau} \right)$$

Sample temperature is obtained from the definition of $\Delta T_0$,

$$T_s = T_0 - \Delta T_0$$

Thermal resistances and capacitances of the sensor as a function of temperature are obtained using the calibration method described above. Using thermal resistances and capacitances obtained by calibration with the temperatures and differential temperatures measured during a DSC experiment allows the sample and reference heat flows, $q_s$ and $q_r$ to be found. As used in conventional DSC, the difference between sample and reference heat flows is the desired result.

$$q = q_s - q_r$$

As noted above, the sample and reference heat flows include the heat flow to the sample and reference and to their pans.

$$q_s = q_{ss} + q_{ps} \qquad q_r = q_{rs} + q_{pr}$$

Where $q_{ss}$ is the sample heat flow, $q_{ps}$ is the sample pan heat flow, $q_{rs}$ is the reference heat flow and $q_{pr}$ is the reference pan heat flow. Because the pans and the reference do not have transitions, their heat flows are just the sensible heat associated with their specific heats:

$$q_{ps} = m_{ps} \cdot c_p \cdot \frac{dT_{ps}}{d\tau} \qquad q_r = m_{pr} \cdot c_p \cdot \frac{dT_{pr}}{d\tau} + m_{rs} \cdot c_{rs} \cdot \frac{dT_{pr}}{d\tau}$$

Where $m_{ps}$ and $m_{pr}$ are the masses of the sample and reference pans, $C_p$ is the specific heat of the pan material, $m_{rs}$ is the mass of the reference material, $C_{rs}$ is the specific heat of the reference material. The sample pan temperature is $T_{ps}$ and the reference pan temperature is $T_{pr}$. It is assumed that the reference material has no transitions, and that it heats at the same rate as the reference pan. Substituting for the sample pan heat flow and solving for the sample heat flow:

$$q_{ss} = q_s - m_{ps} \cdot c_p \cdot \frac{dT_{ps}}{d\tau}$$

Solving the reference heat flow equation for the pan specific heat and substituting the specific heat into the sample heat flow equation:

$$q_{ss} = q_s - q_r \cdot \frac{m_{ps}}{m_{pr}} \cdot \frac{\frac{dT_{ps}}{d\tau}}{\frac{dT_{pr}}{d\tau}} + \frac{m_{ps}}{m_{pr}} \cdot m_{rs} \cdot c_{rs} \cdot \frac{dT_{ps}}{d\tau}$$

This equation gives the actual sample heat flow, accounting for the sample and reference pan heat flows and the heat flow to the reference. The second term on the right hand side is seen to be the reference heat flow multiplied by the ratio of the sample and reference pan masses and by the ratio of the sample and reference pan heating rates. It accounts for the fact that during a transition, the sample pan heats at a different rate than the reference pan because of the transition heat flow. The third term accounts for the heat flow to the reference material. In most cases, the reference pan is empty and the sample heat flow equation becomes.

$$q_{ss} = q_s - q_r \cdot \frac{m_{ps} \cdot \frac{dT_{ps}}{d\tau}}{m_{pr} \cdot \frac{dT_{pr}}{d\tau}}$$

Both of these equations can be written using different nomenclature, or using different units, or using different, but thermodynamically equivalent algebraic expressions. For example, the two equations can be re-written in heat capacity units by dividing by the heating rate as follows:

$$q_{ss}' = \left( q_s - q_r \cdot \frac{m_{ps} \cdot \frac{dT_{ps}}{d\tau}}{m_{pr} \cdot \frac{dT_{pr}}{d\tau}} + \frac{m_{ps}}{m_{pr}} \cdot m_{rs} \cdot c_{rs} \cdot \frac{dT_{ps}}{d\tau} \right) \cdot \frac{1}{\frac{dT_s}{d\tau}}$$

$$q_{ss}' = \left( q_s - q_r \cdot \frac{m_{ps} \cdot \frac{dT_{ps}}{d\tau}}{m_{pr} \cdot \frac{dT_{pr}}{d\tau}} \right) \cdot \frac{1}{\frac{dT_s}{d\tau}}$$

When the sample heating rate is different from the reference heating rate, the fraction of reference heat flow subtracted from the sample heat flow is greater or less, depending upon whether the sample pan heating rate is greater or less than that of the reference pan. Because the reference heat flow is just the reference pan heat flow, this equation accounts for differences between sample and reference pan heating rates. For example, during a melt in a DSC, the sample pan heating rate falls below the programmed rate, while the reference pan continues to heat at the programmed rate. In a conventional DSC the reference heat flow being subtracted from the sample heat flow is for a pan heating at the programmed rate. Thus, during the melt, too much heat is being subtracted from the sample heat flow and the heat flow signal is too small. During the baseline return, the sample pan is heating faster than the reference pan and insufficient heat flow is subtracted from the sample heat flow. As a consequence, the heat flow signal is too large.

To use the true sample heat flow equation requires that the sample and reference pan temperatures be known so that their derivatives may be taken. Unfortunately, there is no way to measure the pan temperatures directly. However, the pan temperatures can be calculated from the temperature and heat flow signals as follows.

The equations for heat flow from the sensor to the sample and reference pans are:

$$q_s = \frac{T_s - T_{ps}}{R_{ps}} \qquad q_r = \frac{T_r - T_{pr}}{R_{pr}}$$

Solving for the pan temperatures.

$$T_{ps} = T_s - q_s \cdot R_{ps} \qquad T_{pr} = T_r - q_r \cdot R_{pr}$$

Using these equations, pan temperatures and sample heat flows can be calculated from the measured signals.

The pan thermal resistances $R_{ps}$ and $R_{pr}$ depend on the pan configuration, the purge gas used in the DSC and the temperature of the DSC. Several techniques for determining $R_{ps}$ and $R_{pr}$ have been developed in the past and are well-known to one of ordinary skill in the art. For example, one well-known technique is to measure the slope of the onset of a metal melt.

A preferred semi-empirical method for determining $R_{ps}$ and $R_{pr}$ is to use a model equation that models heat exchange between the sample and reference pans and the DSC sensor. Because when two nominally flat surfaces are brought into contact, they only make contact over a small fraction of the projected area of contact (because the surfaces

are not perfectly flat), heat exchange could occur in principle through three mechanisms: by direct solid heat conduction through the asperities of the two surfaces in contact, by convection or conduction through the interstitial gas between the surfaces and by radiation between the two surfaces. However, except in cases of an extremely high heat flux and a large temperature difference between the two surfaces, radiation is insignificant. Also, the dominant heat exchange through the gas is by conduction. In that case, the contact thermal resistance between the surfaces can be modeled by heat conduction through two series connected solid conductors (representing each of the surfaces) in parallel with heat conduction through the gas. Using these assumptions to model the DSC pan/sensor heat exchange, the model equation for the DSC pan contact resistance is:

$$R(T) = \frac{1}{\dfrac{\alpha_P \cdot k_p(T) \cdot \alpha_S \cdot k_S(T)}{\alpha_P \cdot k_P(T) + \alpha_S \cdot k_S(T)} + \alpha_G \cdot k_G(T)}$$

Where, R(T) is the contact resistance as a function of temperature; $k_p(T)$, $k_s(T)$, kg(T) are thermal conductivities of the pan, sensor and gas; $\alpha_p$, $\alpha_s$ and $\alpha_g$ are geometric factors for the pan, sensor and gas. The geometric factors have the dimension of length -- they may be thought of as the ratio of the area normal to the heat flow to the length of the heat conduction path. Thermal conductivities of the sensor, pan and gas are known.

The geometric factors are determined empirically as follows. The contact resistance between the pan and the sample may be measured using MDSC with average heating rate equal to zero. A sample of known heat capacity is loaded into a pan and placed on the sample position of the DSC, and the temperature is modulated sinusoidally at fixed amplitude about a given temperature. Assuming the sample and pan temperatures are the same, a two-temperature model of the DSC may be solved to find the time constant of the pan and sample.

$$\tau_s = \frac{-b_s \pm \sqrt{b_s^2 - 4b_s c_s}}{2a_s}$$

where:

$$a_s = \overline{T_s}^2 \cdot \left(\omega^4 \cdot (C_s R_s)^2 + \omega^2\right) - \omega^2 \cdot \overline{T_0}^2$$

$$b_s = 2\overline{T_s}^2 \cdot \omega^2 \cdot C_{ss} \cdot R_s$$

$$c_s = \overline{T_s}^2 \cdot \left[1 + \omega^2 \cdot \left((C_s R_s)^2 + (C_{ss} R_s)^2 + 2C_s C_{ss} R_s^2\right)\right] - \overline{T_0}^2$$

$$R_{ps} = \frac{\tau_s}{C_{ss}}$$

where temperature with an over bar means the modulated temperature amplitude, obtained by the MDSC temperature deconvolution algorithm (as described in U.S. Patent No. 5,224,775, which is incorporated by reference herein), $C_{ss}$ is the combined heat capacity of the sample and the pan and $\omega$ is the circular frequency of the modulation. The assumption that sample and pan temperatures are the same is justified when the modulation period is sufficiently long (typically 60 seconds or above). A similar set of equations can be written for the reference side of the DSC, and the two contact resistances may be determined in a single experiment.

Using this method for determining the contact resistance at a variety of discrete temperatures, the model equation above may be fitted to the data to determine the geometric parameters $\alpha_p$, $\alpha_s$ and $\alpha_g$. Using a multiplicity of different samples and pans, the experiments may be repeated many times and a statistically determined average value

of the contact resistance can be computed.

It must be noted that the method of the present invention cannot be applied to heat flux DSCs generally: it can only be applied to DSCs that separately measure the sample and the reference heat flows. The physical configuration of the apparatus disclosed herein allows the sample and reference heat flows to be measured separately, and this characteristic (although not necessarily the exact embodiment disclosed herein) is required to apply the present invention.

**POWER COMPENSATION DSCs**

Figure 2a is a schematic diagram of a cross-sectional view of a power compensation DSC cell which is not part of the present invention. The DSC cell comprises a sample holder assembly 201s and a reference holder assembly 201r installed in an isothermal enclosure 203. Overall, the sample and reference holder assemblies are manufactured to be as identical as possible. Sample holder 201s has a body 204s in which are embedded a temperature detector 202s, and a heating element (not shown in Figure 2a). A sample in a sample pan 205s is inserted in the cavity 206s of the sample holder, which is closed by a lid 207s. The body of the sample holder 204s is supported by thermal resistor 208s, which is attached to flange 209s. The thermal resistor is the principal path for heat exchange between the sample holder and the isothermal enclosure and allows the sample holder to be heated to temperatures much higher than the isothermal enclosure by applying a modest quantity of heater power. Thermal resistor 208s is a tubular member with a small cross-sectional area in the direction normal to heat flow, as compared with its length in the direction of heat flow.

Similarly, reference holder 201r has a body 204r in which are embedded a temperature detector 202r, and a heating element (not shown in Figure 2a). Reference pan 205r is inserted in the cavity 206r of reference holder 201r, which is closed by lid 207r. The body of the reference holder 204r is supported by thermal resistor 208r, which is attached to flange 209r. The thermal resistor is the principal path for heat exchange between the reference holder 201r and the isothermal enclosure, and allows the reference holder to be heated to temperatures much higher than the isothermal enclosure by modest heater power. It is a tubular member with a small cross-sectional area in the direction normal to heat flow as compared with its length in the direction of heat flow. A reference material could be placed in a reference pan 205r, which is inserted in the cavity of reference holder 201 r, although the usual practice is to omit the reference material and place an empty pan 205r in reference holder 201 r.

Isothermal enclosure 203 comprises a body 211 and a removable lid 212 that allows access to the sample and reference holders for loading the sample and reference. Flange 209s of the sample holder is joined to the body 211 of the isothermal enclosure so that heat flows from the sample holder and sample through the thermal resistor 208s to the isothermal body. Isothermal enclosure temperature detector 210 is installed in body 211 of the isothermal enclosure 203 to measure the isothermal temperature; the difference between this temperature and the temperature of the sample holder is $\Delta T_0$. The isothermal body is cooled by various means, for example a liquid cryogen, mechanical refrigeration, water or air. The isothermal enclosure is constructed of a high thermal conductivity material, typically aluminum, to minimize variation of temperature within the enclosure.

This embodiment which is not part of the present invention uses the sample temperature measurement as the only absolute temperature measurement. It also measures the differential temperature between the sample and reference holders, the differential temperature between the sample holder and the isothermal enclosure, and the differential power to the sample with respect to the reference. The differential power to the sample with respect to the reference is measured, for example, by measuring the power to the sample holder and the power to the reference holder separately, and obtaining the difference between the separate measurements. The power to the sample holder and the power to the reference holder can be measured in a number of different ways, for example by instrumentation that measures the voltages and currents to the sample and reference heaters. Thus, this embodiment uses a combination of a single absolute temperature measurement (the sample temperature), two differential temperature measurements (sample/reference and sample/enclosure) and a differential power measurement (sample/reference) to obtain the quantities needed to calculate the differential heat flow to the sample according to the power compensation DSC heat flow equation (equation 6, reproduced here for convenience):

$$q = \Delta p + \Delta T_0 \cdot \left( \frac{R_r - R_s}{R_r \cdot R_s} \right) - \frac{\Delta T}{R_r} + (C_r - C_s) \cdot \frac{dT_s}{d_\tau} - C_r \cdot \frac{d\Delta T}{d_\tau}$$

It will be recognized that other combinations of a single absolute temperature and two differential temperature measurements may also be used with a five term heat flow equation. There are three possible choices for the single absolute temperature measurement: the sample holder temperature, the reference holder temperature and the isothermal enclosure temperature. Each of these can be used with any two of the three possible differential temperature measurements to achieve the same results. Thus the sample temperature $T_s$ can be used as the absolute temperature measurement with differential temperature measurements $T_0$-$T_s$ and $T_s$-$T_r$ as in the preferred embodiment, or with $T_0$-$T_s$ and

$T_0$-$T_r$ or with $T_s$-$T_r$ and $T_0$-$T_r$. The reference temperature $T_r$ can be used as the absolute temperature measurement with differential temperature measurements $T_s$-$T_r$ and $T_0$-$T_r$ or with $T_0$-$T_r$ and $T_0$-$T_s$ or with $T_s$-$T_r$ and $T_0$-$T_s$. The base temperature To can be used as the absolute temperature measurement with $T_0$-$T_s$ and $T_s$-$T_r$, or with $T_0$-$T_s$ and $T_0$-$T_r$, or with $T_0$-$T_r$ and $T_s$-$T_r$. Thus, there are eight additional configurations that can give the same information if the five term heat flow equation is rewritten accordingly.

**Method for Determining Thermal Parameters**

To use the five term Power Compensation DSC heat flow equation, the four thermal parameters $C_s$, $C_r$, $R_s$, $R_r$ must be determined. Determination of these parameters constitutes heat flow calibration of the DSC.

Heat flow calibration requires two experiments from which the four thermal parameters can be calculated. The first experiment is performed with an empty DSC cell. The DSC program begins with an isothermal temperature segment at a temperature below the lowest temperature of the desired calibration range, followed by a constant heating rate temperature ramp, and ending with an isothermal temperature segment above the highest temperature of the desired calibration range. The heating rate should be the same that is to be used for subsequent experiments. The second calibration experiment is performed, for example, with sapphire specimens without pans loaded in both the sample and reference holders. Other materials having known thermal properties and no transitions in the temperature range of interest may be used instead of sapphire. The same thermal program is used in the second experiment as was used for the first empty DSC experiment.

The heat balance equation on the sample side of a power compensation differential scanning calorimeter is:

$$q_s = \frac{T_0 - T_s}{R_s} + p_s - C_s \cdot \frac{dT_s}{d_\tau}$$

On the reference side, the heat balance equation is:

$$q_r = \frac{T_0 - T_r}{R_r} + p_r - C_r \cdot \frac{dT_r}{d_\tau}$$

Beginning with the heat balance equation for the sample side, the heat flow during the empty DSC experiment is set equal to zero, and the heat balance equation becomes:

$$\frac{\Delta T_{01}}{R_s} + p_{s1} - C_s \cdot \frac{dT_{s1}}{d_\tau} = 0$$

The numerical subscript 1 indicates the first calibration experiment. For the second calibration experiment using sapphire specimens, the sample heat flow is set equal to:

$$q_{s2} = m_{s2} \cdot C_{sapph} \cdot \frac{dT_{s2}}{d_\tau}$$

where $m_{s2}$ is the mass of the sapphire sample, $C_{sapph}$ is the known heat capacity of sapphire and the numerical subscript 2 indicates the second calibration experiment. For the second calibration experiment, the heat balance equation becomes:

$$\frac{\Delta T_{02}}{R_s} + p_{s2} - C_s \cdot \frac{dT_{s2}}{d_\tau} = m_{s2} \cdot C_{sapph} \cdot \frac{dT_{s2}}{d_\tau}$$

Solving these two equations simultaneously for $C_s$ and $R_s$ gives:

$$C_s = \frac{\Delta T_{01} \cdot \left( m_{s2} \cdot C_{sapph} \cdot \frac{dT_{s2}}{d_\tau} - p_{s2} \right) + \Delta T_{02} \cdot p_{s1}}{\Delta T_{02} \cdot \frac{dT_{s1}}{d_\tau} - \Delta T_{01} \cdot \frac{dT_{s2}}{d_\tau}}$$

$$R_s = \frac{\Delta T_{02} \cdot \frac{dT_{s1}}{d_\tau} - \Delta T_{01} \cdot \frac{dT_{s2}}{d_\tau}}{\frac{dT_{s1}}{d_\tau} \cdot \left( m_{s2} \cdot C_{sapph} \cdot \frac{dT_{s2}}{d_\tau} - p_{s2} \right) + \frac{dT_{s2}}{d_\tau} \cdot p_{s1}}$$

Similarly, the heat balance equations for the empty and the sapphire calibration runs on the reference side give:

$$\frac{T_{01} - T_{r1}}{R_r} + p_{r1} - C_r \cdot \frac{dT_{r1}}{d_\tau} = 0$$

$$\frac{T_{02} - T_{r2}}{R_r} + p_{r2} - C_r \cdot \frac{dT_{r2}}{d_\tau} = m_{r2} \cdot C_{sapph} \cdot \frac{dT_{r2}}{d_\tau}$$

The reference temperature $T_r$ is not measured directly. Substituting for $T_r$ and for $\Delta T_0$:

$$T_r = T_s - \Delta T$$

$$\Delta T_0 = T_0 - T_s$$

The heat balance equations become:

$$\frac{\Delta T_{01} + \Delta T_1}{R_r} + p_{r1} - C_r \cdot \left( \frac{dT_{s1}}{d_\tau} - \frac{d\Delta T_1}{d_\tau} \right) = 0$$

$$\frac{\Delta T_{02} + \Delta T_2}{R_r} + p_{r2} - C_r \cdot \left( \frac{dT_{s2}}{d_\tau} - \frac{d\Delta T_2}{d_\tau} \right) = m_{r2} \cdot C_{sapph} \cdot \left( \frac{dT_{s2}}{d_\tau} - \frac{d\Delta T_2}{d_\tau} \right)$$

Simultaneous solution of these equations gives:

$$C_r = \frac{(\Delta T_{01} + \Delta T_1) \cdot \left[ m_{r2} \cdot C_{sapph} \cdot \left( \frac{dT_{s2}}{d_\tau} - \frac{d\Delta T_2}{d_\tau} \right) - p_{r2} \right] + (\Delta T_{02} + \Delta T_2) \cdot p_{r1}}{(\Delta T_{01} + \Delta T_1) \cdot \left( \frac{d\Delta T_2}{d_\tau} - \frac{dT_{s2}}{d_\tau} \right) + (\Delta T_{02} + \Delta T_2) \cdot \left( \frac{dT_{s1}}{d_\tau} - \frac{d\Delta T_1}{d_\tau} \right)}$$

$$R_r = \frac{(\Delta T_{01} + \Delta T_1) \cdot \left( \frac{d\Delta T_2}{d_\tau} - \frac{dT_{s2}}{d_\tau} \right) + (\Delta T_{02} + \Delta T_2) \cdot \left( \frac{dT_{s1}}{d_\tau} - \frac{d\Delta T_1}{d_\tau} \right)}{\left[ m_{r2} \cdot C_{sapph} \cdot \left( \frac{dT_{s1}}{d_\tau} - \frac{d\Delta T_1}{d_\tau} \right) - p_{r2} \right] \cdot \left( \frac{dT_{s1}}{d_\tau} - \frac{d\Delta T_1}{d_\tau} \right) - p_{r1} \cdot \left( \frac{d\Delta T_2}{d_\tau} - \frac{dT_{s2}}{d_\tau} \right)}$$

In an alternate embodiment, both calibration experiments may contain specimens. The specimens in the two calibration experiments must have substantially different masses. For example, the sample (reference) specimen masses are substantially different if the mass of the sample (reference) specimen for the first calibration experiment is twice the mass of the sample (reference) specimen for the second experiment, whereas a 5 % difference would not be substantial. In this embodiment, the heat balance equation for the first experiment on the sample side becomes:

$$\frac{\Delta T_{01}}{R_s} + p_{s1} - C_s \cdot \frac{dT_{s1}}{d\tau} = m_{s1} \cdot C_{sapph} \cdot \frac{dT_{s1}}{d\tau}$$

and the heat balance equation for the first experiment on the reference side becomes:

$$\frac{\Delta T_{01} + \Delta T_1}{R_r} + p_{r1} - C_r \cdot \left( \frac{dT_{s1}}{d\tau} - \frac{d\Delta T_1}{d\tau} \right) = m_{r1} \cdot C_{sapph} \cdot \left( \frac{dT_{s1}}{d\tau} - \frac{d\Delta T_1}{d\tau} \right)$$

Solving simultaneously as before gives:

$$C_s = \frac{\Delta T_{01} \cdot \left( m_{s2} \cdot C_{sapph} \cdot \frac{dT_{s2}}{d\tau} - p_{s2} \right) + \Delta T_{02} \cdot \left( p_{s1} - m_{s1} \cdot C_{sapph} \cdot \frac{dT_{s1}}{d\tau} \right)}{\Delta T_{02} \cdot \frac{dT_{s1}}{d\tau} - \Delta T_{01} \cdot \frac{dT_{s2}}{d\tau}}$$

$$R_s = \frac{\Delta T_{02} \cdot \frac{dT_{s1}}{d\tau} - \Delta T_{01} \cdot \frac{dT_{s2}}{d\tau}}{\frac{dT_{s1}}{d\tau} \cdot \left( m_{s2} \cdot C_{sapph} \cdot \frac{dT_{s2}}{d\tau} - p_{s2} \right) + \frac{dT_{s2}}{d\tau} \cdot \left( p_{s1} - m_{s1} \cdot C_{sapph} \cdot \frac{dT_{s1}}{d\tau} \right)}$$

$$C_r = \frac{(\Delta T_{01} + \Delta T_1) \cdot \left[ m_{r2} \cdot C_{sapph} \cdot \left( \frac{dT_{s2}}{d\tau} - \frac{d\Delta T_2}{d\tau} \right) - p_{r2} \right] + (\Delta T_{02} + \Delta T_2) \cdot \left[ p_{r1} - m_{r1} \cdot C_{saph} \cdot \left( \frac{dT_{s1}}{d\tau} - \frac{d\Delta T_1}{d\tau} \right) \right]}{(\Delta T_{01} + \Delta T_1) \cdot \left( \frac{d\Delta T_2}{d\tau} - \frac{dT_{s2}}{d\tau} \right) + (\Delta T_{02} + \Delta T_2) \cdot \left( \frac{dT_{s1}}{d\tau} - \frac{d\Delta T_1}{d\tau} \right)}$$

$$R_r = \frac{(\Delta T_{01} + \Delta T_1) \cdot \left( \frac{d\Delta T_2}{d\tau} - \frac{dT_{s2}}{d\tau} \right) + (\Delta T_{02} + \Delta T_2) \cdot \left( \frac{dT_{s1}}{d\tau} - \frac{d\Delta T_1}{d\tau} \right)}{\left( \frac{dT_{s1}}{d\tau} - \frac{d\Delta T_1}{d\tau} \right) \cdot \left[ m_{r2} \cdot C_{sapph} \cdot \left( \frac{dT_{s2}}{d\tau} - \frac{d\Delta T_2}{d\tau} \right) - p_{r2} \right] + \left( \frac{dT_{s2}}{d\tau} + \frac{d\Delta T_2}{d\tau} \right) \cdot \left[ p_{r1} - m_{r1} \cdot C_{sapph} \cdot \left( \frac{dT_{s1}}{d\tau} - \frac{d\Delta T_1}{d\tau} \right) \right]}$$

The thermal capacitances and resistances are used to calculate sample heat flow during a DSC experiment. They may be used as tabular data, with suitable interpolation for intermediate values, or they may be fitted by a mathematical expression, *e.g.*, to a polynomial. In either case, the calculated capacitances and resistances must be applied as a function of temperature. The sapphire specimen masses range from 25 mg to 125 mg, with typical masses ranging from 75 mg to 100 mg.

The power to the sample $p_s$ and the power to the reference $p_r$ are measured separately during the calibration step. The differential power is obtained by subtracting $p_r$ from $p_s$.

**Improved calculation**

A power compensation DSC as described above comprises independent sample and reference holders that may be modeled using a thermal resistance and a thermal capacitance for each of the sample and reference holders

as shown in Figure 2. Thermal resistance and capacitance elements are idealizations of the sample and reference holders, which allow simple mathematical expressions describing the thermal behavior of the DSC to be written. $R_s$ and $R_r$ are thermal resistances, $C_s$ and $C_r$ are thermal capacitances representing the sample and reference holders. To, $T_s$ and $T_r$ are the temperatures of the isothermal enclosure, sample holder and reference holder. Heating power supplied to the sample holder is $p_s$, comprising the average heating power plus the differential power. Heating power supplied to the reference holder is $p_r$, comprising the average heating power minus the differential power. The heat flow to the sample and its pan and to the reference and its pan are $q_s$ and $q_r$.

Performing a heat balance on the sample and reference gives the heat flow differential equations,

$$q_s = \frac{T_0 - T_s}{R_s} + p_s - C_s \cdot \frac{dT_s}{d\tau} \qquad q_r = \frac{T_0 - T_r}{R_r} + p_r - C_r \cdot \frac{dT_r}{d\tau}$$

In the invention, temperature $T_0$, the difference between the isothermal enclosure and sample holder temperatures and the difference between the sample and reference holder temperatures are measured. The differential temperatures are defined by:

$$\Delta T = T_s - T_r \qquad \Delta T_0 = T_0 - T_s$$

Substituting into the heat balance equations gives,

$$q_s = \frac{\Delta T_0}{R_s} + p_s - C_s \cdot \frac{dT_s}{d\tau} \quad \text{and} \quad q_r = \frac{\Delta T_0 + \Delta T}{R_r} + p_r - C_r \cdot \left( \frac{dT_s}{d\tau} - \frac{d\Delta T}{d\tau} \right)$$

Sample temperature is obtained from the definition of $\Delta T_0$,

$$T_s = T_0 - \Delta T_0$$

Thermal resistances and capacitances of the sample and reference holders as a function of temperature are obtained using the calibration method disclosed above. Using thermal resistances and capacitances from calibration with the sample and reference holder power, temperatures and differential temperatures measured during a DSC experiment allows the sample and reference heat flow, $q_s$ and $q_r$ to be found. The difference between sample and reference heat flows is the desired result:

$$q = q_s - q_r$$

As noted above, the sample and reference heat flows include the heat flow to the sample and reference and to their pans.

$$q_s = q_{ss} + q_{ps} \qquad q_r = q_{rs} + q_{pr}$$

Where $q_{ss}$ is the sample heat flow, $q_{ps}$ is the sample pan heat flow, $q_{rs}$ is the reference heat flow and $q_{pr}$ is the reference pan heat flow. The pans and the reference do not have transitions so that their heat flows are just the sensible heat associated with their specific heats:

$$q_{ps} = m_{ps} \cdot c_p \cdot \frac{dT_{ps}}{d\tau} \qquad q_r = m_{pr} \cdot c_p \cdot \frac{dT_{pr}}{d\tau} + m_{rs} \cdot c_{rs} \cdot \frac{dT_{pr}}{d\tau}$$

Where $m_{ps}$ and $m_{pr}$ are the masses of the sample and reference pans, $C_p$ is the specific heat of the pan material, $m_{rs}$ is the mass of the reference material, $C_{rs}$ is the specific heat of the reference material. The sample pan temperature is

$T_{ps}$ and the reference pan temperature is $T_{pr}$. It is assumed that the reference material has no transitions and it heats at the same rate as the reference pan. Substituting for the sample pan heat flow and solving for the sample heat flow:

$$q_{ss} = q_s - m_{ps} \cdot c_p \cdot \frac{dT_{ps}}{d\tau}$$

Solving the reference heat flow equation for the pan specific heat and substituting it into the sample heat flow equation:

$$q_{ss} = q_s - q_r \cdot \frac{m_{ps}}{m_{pr}} \cdot \frac{\frac{dT_{ps}}{d\tau}}{\frac{dT_{pr}}{d\tau}} + \frac{m_{ps}}{m_{pr}} \cdot m_{rs} \cdot c_{rs} \cdot \frac{dT_{ps}}{d\tau}$$

This equation gives the actual sample heat flow, accounting for the sample and reference pan heat flows and the heat flow to the reference. The second term on the right hand side is seen to be the reference heat flow multiplied by the ratio of the sample and reference pan masses and by the ratio of the sample and reference pan heating rates. It accounts for the fact that during a transition, the sample pan heats at a different rate than the reference pan because of the transition heat flow. The third term accounts for the heat flow to the reference material. In most cases, the reference pan is empty and the sample heat flow equation becomes:

$$q_{ss} = q_s - q_r \cdot \frac{m_{ps} \cdot \frac{dT_{ps}}{d\tau}}{m_{pr} \cdot \frac{dT_{pr}}{d\tau}}$$

Both of these equations can be written using different nomenclature, or using different units, or using different, but thermodynamically equivalent algebraic expressions.

When the sample heating rate is different from the reference heating rate, the fraction of reference heat flow subtracted from the sample heat flow is greater or less, depending upon whether the sample pan heating rate is greater or less than that of the reference pan. Because the reference heat flow is just the reference pan heat flow, this equation accounts for differences between sample and reference pan heating rates. For example, during a melt in DSC, the sample pan heating rate falls below the programed rate, while the reference pan continues to heat at the programmed rate. In a conventional DSC the reference heat flow being subtracted from the sample heat flow is for a pan heating at the programmed rate thus, during the melt too much heat is being subtracted from the sample heat flow and the heat flow signal is too small. During the baseline return, the sample pan is heating faster than the reference pan and insufficient heat flow is subtracted from the sample heat flow, consequently the heat flow signal is too large.

To use the true sample heat flow equation requires that the sample and reference pan temperatures be known so that their derivatives may be taken. Unfortunately there is no way to measure the pan temperatures directly. The pan temperatures can be calculated using the temperature and heat flow signals.

The equations for heat flow from the sample and reference holders to the sample and reference pans are:

$$q_s = \frac{T_s - T_{ps}}{R_{ps}} \qquad q_r = \frac{T_r - T_{pr}}{R_{pr}}$$

Solving for the pan temperatures:

$$T_{ps} = T_s - q_s \cdot R_{ps} \qquad T_{pr} = T_r - q_r \cdot R_{pr}$$

Using these equations, the pan temperatures and sample heat flows are obtained from measurements. $R_{ps}$

and $R_{pr}$ can be determined using the semi-empirical procedures described above for these parameters with reference to heat flux calorimeters.

## EXPERIMENTAL RESULTS

Figure 3 shows the application of the improved calculation of the present invention to the calculation of DSC heat flows in a heat flux DSC, for a 4.92 mg indium melt at 10 °C/min plotted versus time. The conventional DSC result is the curve labeled 301, the result using the present invention without using the improved calculation is labeled 302 and the result using the method of the present invention using the improved calculation is labeled 303. Beginning at the left side of the plot, the onset of the indium melt calculated using the improved calculation 304 occurs earlier and is steeper than the onset of indium that occurs using the present invention without using the improved calculation 305, or using a conventional DSC 306. During the melt, the heat flow signal calculated using the improved calculation 307 is much larger than that obtained using the present invention without using the improved calculation 308, which in turn is substantially larger than the signal obtained using conventional DSC 309. The melt is completed at the heat flow signal peak when the latent heat of fusion has been absorbed by the sample.

The heat flow calculated using the improved calculation 310 is higher and occurs slightly earlier compared to the peak calculated according to the present invention without using the improved calculation 311, and much higher and earlier still than the peak obtained using a conventional DSC 312. Immediately following the peak, the sample heat flow decreases rapidly as the flow of heat to the sample following the melt returns to the value just before the transition which, corresponds to the specific heat of the sample. The post melt decay of the heat flow signal 313 calculated using the improved calculation of the present invention is extremely rapid, while the post melt heat flow decay 314 using the present invention without using the improved calculation is somewhat slower and the post melt decay 315 of conventional DSC is slower still. The complete indium melt heat flow signal 303 calculated using the improved calculation comprising the onset 304, melt 307, peak heat flow 310 and post melt decay 313 is a much more accurate measurement than that according to the present invention without using the improved calculation (as shown in curve 302), or of a conventional DSC (as shown in curve 301).

Figure 4 is a graphic representation of the temperatures of the sample sensor, the sample pan and the sample, during a time interval surrounding the onset of a melt. Temperature (T) is shown as the ordinate and time ($\tau$) is shown as the abscissa. Trace 400 is the sample sensor temperature, trace 401 is the sample pan temperature and trace 402 is the sample temperature. The melt begins at the onset time, $\tau_{0nset}$ 403. Before the melt onset, the sample sensor, sample pan and sample temperature traces are parallel, because all three are changing at the heating rate of the DSC; indicating a stationary heat flow. At melt onset 403, the sample temperature stops changing. The sample pan temperature passes through a transient region 404, where the rate of change of temperature decreases until a steady-state condition 405 is established. Here the temperature changes at a constant rate which is slower than the heating rate of the DSC sensor base. Similarly, the sample sensor temperature 400 passes through a transient region 406, where the rate of change of temperature decreases until a steady-state condition 407 is reached, where the rate of change of temperature is slower than that of the DSC sensor base, yet faster than that of the sample pan.

The heat flow to the sample $q_s$ as expressed above is proportional to the difference between sample sensor and sample pan temperatures. At the same time, the reference heat flow $q_r$ is constant. This is because the configuration of the sensor makes the temperatures $T_s$ and $T_r$ independent.

The change in the onset shape and the increased speed of the return to baseline following the melt is due principally to the fourth term of the four-term heat flow equation. The fourth term accounts for differing heat storage between the sample and reference side of the sensor as a result of the differing heating rates between the sample and reference sides of the sensor.

## ADDITIONAL CONSIDERATIONS

When using the improved heat flow calculation method, the sample and reference heat flows are measured separately, and the reference heat flow is multiplied by a factor that is the product of the ratio of pan masses and the ratio of the pan heating rates. The pan mass and heating rate corrected reference heat flow is subtracted from the sample heat flow. To obtain optimal results, two problems relating to the generation of noise must be addressed.

The first problem occurs when very low heating rates are used. The derivatives of the pan temperatures, i.e. the pan heating rates $dT_{ps}/d\tau$ and $dT_{pr}/d\tau$, are computed numerically using several data points either side of the evaluation point. Preferably, a technique developed by A. Savitsky and N.J.E. Golay, "Smoothing and Differentiation by Simplified Least Squares Procedures," Analytical Chemistry, Vol. 36, No. 8, pp. 1627-1639 is used to obtain a least squares polynomial fit of the data to be differentiated (in this case temperatures or temperature differences). However, numerical differentiation is well known to create a noisy signal. At low heating rates, like 0.1°C/min, the temperature changes very slowly and because of the limited resolution of temperature measurement and applied heater power, the measured

temperature often backs up. When that happens, the calculated derivatives often become negative and sometimes very close to zero. When the derivative of reference pan temperature in the denominator of the pan heating rate ratio is very close to zero, we have a "near divide by zero" and the factor multiplying the reference heating rate becomes very large (either negative or positive) and the calculated heat flow shows huge spikes.

This problem cannot be resolved simply by smoothing the derivatives, because if the transition peaks are smoothed, then improvement in resolution of the invention is lost. This problem is preferably resolved by taking advantage of the observation that the noise in the sample and reference pan derivatives is very well correlated.

The derivative of the reference pan temperature is added and subtracted from the numerator:

$$\frac{\frac{dT_{ps}}{d\tau}}{\frac{dT_{pr}}{d\tau}} = \frac{\frac{dT_{ps}}{d\tau} - \frac{dT_{pr}}{d\tau} + \frac{dT_{pr}}{d\tau}}{\frac{dT_{pr}}{d\tau}}$$

then this equation is rearranged to give:

$$\frac{\frac{dT_{ps}}{d\tau}}{\frac{dT_{pr}}{d\tau}} = 1 + \frac{\frac{dT_{ps}}{d\tau} - \frac{dT_{pr}}{d\tau}}{\frac{dT_{pr}}{d\tau}}$$

In the denominator, the difference between sample and reference pan heating rates cancels the correlated noise. Because the sample and reference sides of the DSC are independent, and as long as the reference is transition free, the heating rate of the reference pan is always very close to the programmed heating rate. Replace the reference pan heating rate in the denominator with the programmed heating rate:

$$\frac{\frac{dT_{ps}}{d\tau}}{\frac{dT_{pr}}{d\tau}} = 1 + \frac{\frac{dT_{ps}}{d\tau} - \frac{dT_{pr}}{d\tau}}{b}$$

where b is the programmed heating rate. The heat flow spikes that result from the near zero denominator are thus eliminated, and the correlated sample and reference pan heating rate noise is cancelled. The sample heat flow equation then becomes:

$$q_{ss} = q_s - q_r \cdot \frac{m_{ps}}{m_{pr}} \cdot \left( 1 + \frac{\frac{dT_{ps}}{d\tau} - \frac{dT_{pr}}{d\tau}}{b} \right)$$

Another problem that occurs during transitions is also preferably resolved as follows. The sample and reference heat flows both have a rather high level of noise that is common mode, i.e. it is essentially identical in both signals and can be eliminated by taking the difference between the two signals. During the baseline portion of a DSC experiment, the sample and reference pan heating rates are essentially identical and equal to the programmed heating rate so that the heating rate correction term applied to the reference heat flow is 1. Under these conditions, the common mode noise in the sample and reference heat flows cancels and a low noise heat flow signal is obtained. When a transition occurs, the heating rate correction term becomes substantially larger than 1. The noise in the reference heat flow signal is increased by this gain factor and cancellation of the common mode noise is lost. Hence, during a transition, the resultant sample heat flow $q_{ss}$ becomes very noisy.

This problem can also be resolved. The second term on the right hand side of the heat flow equation involving

the reference heat flow is expanded, giving.

$$q_{ss} = q_s - q_r \cdot \frac{m_{ps}}{m_{pr}} - q_r \cdot \frac{m_{ps}}{m_{pr}} \cdot \frac{\frac{dT_{ps}}{d\tau} - \frac{dT_{pr}}{d\tau}}{b}$$

So far nothing has been gained, but because the sample and reference sides of the DSC sensor are independent, the reference heat flow (generally, just that of an empty pan) changes very slowly with time and smoothing or filtering may be applied without effecting the reference heat flow. Thus, the reference heat flow in the third term of the equation above is smoothed, or filtered so that it is quiet. The resulting equation is.

$$q_{ss} = q_s - q_r \cdot \frac{m_{ps}}{m_{pr}} - \overline{q_r} \cdot \frac{m_{ps}}{m_{pr}} \cdot \frac{\frac{dT_{ps}}{d\tau} - \frac{dT_{pr}}{d\tau}}{b}$$

The over bar on the second reference heat flow term indicates that it is smoothed or filtered. With this configuration, the common mode noise in the sample heat flow is cancelled by that of the first reference heat flow term. During the baseline part of an experiment, the third term is zero because the sample and reference pan heating rates are identical, then during a transition, when the pan heating rates differ, the gain of the heating rate term is applied to a smoothed or filtered reference heat flow. In this way, a quiet heat flow signal is obtained at all times during an experiment with no loss of resolution because of smoothing or filtering.

The foregoing disclosure of embodiments of the present invention has been presented for purposes of illustration and description.

The invention is to be defined only by the claims appended hereto.

## Claims

1. A method for calculating a heat flow ($q_{ss}$) to a sample in a differential scanning calorimeter having a sensor comprising a base (3), a sample platform (1) being configured to receive a sample pan, and a reference platform (4) being configured to receive a reference pan, using

   - an absolute temperature measurement ($T_0$) of the temperature of a base position of the calorimeter taken by a base thermocouple (12; 13, 14),
   - a first differential temperature measurement ($\Delta T_0$) using a first differential thermocouple configuration (9, 13) measuring the differential temperature at said sample platform ($T_s$) with respect to the base (To), and
   - a second differential temperature measurement ($\Delta T$), using a second differential thermocouple configuration (9, 11) measuring the differential temperature of said sample platform ($T_s$) with respect to the reference platform ($T_r$); the method comprising the steps of:

     a) calibrating the sensor;
     b) operating the differential scanning calorimeter; and
     c) calculating the heat flow ($q_{ss}$) to the sample.

2. The method of claim 1, wherein the heat flow to the sample is calculated according to:

$$q_{ss} = q_s - q_r \cdot \frac{m_{ps}}{m_{pr}} \cdot \frac{\frac{dT_{ps}}{d\tau}}{\frac{dT_{pr}}{d\tau}} + \frac{m_{ps}}{m_{pr}} \cdot m_{rs} \cdot c_{rs} \cdot \frac{dT_{ps}}{d\tau}$$

or a thermodynamically equivalent expression;

and wherein

$q_s$ is the heat flow to the sample and to the sample pan,
$q_r$ is the heat flow to the reference and to the reference pan,
$m_{ps}$ is the mass of the sample pan,
$m_{pr}$ is the mass of the reference pan,
$T_{ps}$ is the sample pan temperature,
$T_{pr}$ is the reference pan temperature,
$m_{rs}$ is the mass of a reference material,
$c_{rs}$ is the specific heat of the reference material, and
$T$ represents time.

**3.** The method of claims 1 or 2, wherein the reference pan is empty such that the heat flow to the sample is calculated according to:

$$q_{ss} = q_s - q_r \cdot \frac{m_{ps} \cdot \frac{dT_{ps}}{d\tau}}{m_{pr} \cdot \frac{dT_{pr}}{d\tau}}$$

**4.** The method of any of claims 1 to 3, comprising determining the sample and reference pan temperatures $T_{ps}$ and $T_{pr}$, respectively, according to:

$$T_{ps} = T_s - q_s \cdot R_{ps} \quad \text{and} \quad T_{pr} = T_r - q_r \cdot R_{pr}$$

where $R_{ps}$ and $R_{pr}$ are the thermal resistances of the sample pan and the reference pan, respectively,
$T_s$, $T_r$, are the temperatures of the sample and reference platforms, and
$T_r$ is the temperature of the reference platform.

**5.** The method of any of claims 1 to 4, further comprising

c) the step of accounting for the sample and reference pan heat flows and calculating the heat flow to the sample.

**6.** The method of claim 6, wherein step c) comprises also accounting for the heat flow to the reference.

**7.** The method of any of claims 4 to 6, wherein $R_{ps}$ and $R_{pr}$ are obtained using a model equation for contact resistance.

**8.** The method of any of the preceding claims, wherein the differential scanning calorimeter is a heat flux differential scanning calorimeter or a power compensation differential scanning calorimeter.

**9.** The method of claim 1, wherein, for a heat flux differential scanning calorimeter, the steps of calibrating the sensor comprises:

a) placing a first sample calibration sample on a sample position of the differential scanning calorimeter and a first reference calibration sample on a reference position of the differential scanning calorimeter;
b) running a first experiment comprising a first isothermal segment, a second constant heating rate segment and a third isothermal segment, and measuring an absolute temperature with the absolute temperature detector, a first differential temperature using the first differential temperature measurement detector and a second differential temperature using the second differential temperature measurement detector;
c) placing a second sample calibration sample on a sample position of the differential scanning calorimeter and a second reference calibration sample on a reference position of the differential scanning calorimeter;
d) running a second experiment comprising the first isothermal segment, the second constant heating rate segment and the third isothermal segment, and measuring the absolute temperature with the absolute temperature detector, the first differential temperature using the first differential temperature measurement detector

and the second differential temperature using the second differential temperature measurement detector; and e) calculating the sensor sample thermal resistance, the sensor reference thermal resistance, the sensor sample thermal capacitance and the sensor reference thermal capacitance.

**10.** The method of claim 9, wherein the sensor sample thermal capacitance $C_s$ and the sensor sample thermal resistance $R_s$ are calculated according to

$$C_s = \frac{\Delta T_0{}_1 \cdot q_{s2} - \Delta T_0{}_2 \cdot q_{s1}}{\Delta T_0{}_2 \frac{dT_{s1}}{d\tau} - \Delta T_0{}_1 \frac{dT_{s2}}{d\tau}}$$

$$R_s = \frac{\Delta T_0{}_2 \cdot \frac{dT_{s1}}{d\tau} - \Delta T_0{}_1 \cdot \frac{dT_{s2}}{d\tau}}{q_{s2} \cdot \frac{dT_{s1}}{d\tau} - q_{s1} \cdot \frac{dT_{s2}}{d\tau}}$$

wherein the numerical subcripts 1 and 2 indicate said first and second calibration experiments.

**11.** The method of claim 10, wherein the sensor reference thermal capacitance $C_r$ and the sensor reference thermal resistance $R_r$ are calculated according to

$$R_r = \frac{(\Delta T_0{}_2 + \Delta T_2) \cdot \left(\frac{dT_{s1}}{d\tau} - \frac{d\Delta T_1}{d\tau}\right) - (\Delta T_0{}_1 + \Delta T_1) \cdot \left(\frac{dT_{s2}}{d\tau} - \frac{d\Delta T_2}{d\tau}\right)}{q_{r2} \cdot \left(\frac{dT_{s1}}{d\tau} - \frac{d\Delta T_1}{d\tau}\right) - q_{r1} \cdot \left(\frac{dT_{s2}}{d\tau} - \frac{d\Delta T_2}{d\tau}\right)}$$

$$C_r = \frac{(\Delta T_0{}_1 + \Delta T_1) \cdot q_{r2} - (\Delta T_0{}_2 + \Delta T_2) \cdot q_{r1}}{(\Delta T_0{}_2 + \Delta T_2) \cdot \left(\frac{dT_{s1}}{d\tau} - \frac{d\Delta T_1}{d\tau}\right) - (\Delta T_0{}_1 + \Delta T_1) \cdot \left(\frac{dT_{s2}}{d\tau} - \frac{d\Delta T_2}{d\tau}\right)}$$

**12.** The method of claim 1, wherein the step of calibrating the sensor comprises a first experiment with an empty differential scanning calorimeter cell.

**13.** The method of claim 12, wherein the step of calibrating the sensor comprises a second experiment using a sample calibration sample having mass $m_s$ and a reference calibration sample having mass $m_r$.

**14.** The method of claim 1, wherein the step of calibrating the sensor uses a sapphire sample calibration sample and a sapphire reference calibration sample.

**15.** The method of claim 1, wherein the step of calibrating the sensor comprises calculating sensor sample and reference time constants.

**16.** The method of claim 9, wherein the step of calibrating the sensor comprises calculating the sensor sample thermal capacitance according to:

$$C_s = \frac{m_s \cdot Cmat}{\frac{\Delta T_0}{\left(\frac{dT_s}{d\tau}\right) \cdot \tau_s} - 1}$$

wherein $C_{mat}$ is the known specific heat of the calibration sample.

**17.** The method of claim 9, wherein the step of calibrating the sensor comprises calculating the sensor reference thermal capacitance according to:

$$C_r = \frac{m_r \cdot C_{mat}}{\dfrac{\Delta T_0 + \Delta T}{\left(\dfrac{dT_s}{d\tau} - \dfrac{d\Delta T}{d\tau}\right) \cdot \tau_r} - 1}$$

wherein $C_{mat}$ is the known specific heat of the calibration sample.

**18.** The method of claim 1, wherein, for a heat flux differential scanning calorimeter, the steps of calibrating the sensor comprises:

a) running a first experiment comprising a first isothermal segment, a second constant heating rate segment and a third isothermal segment with an empty differential scanning calorimeter cell, and measuring a first differential temperature using the first differential temperature measurement detector and a second differential temperature using the second differential temperature measurement detector;
b) placing a sample calibration sample on a sample position of the differential scanning calorimeter and a reference calibration sample on a reference position of the differential scanning calorimeter;
c) running a second experiment comprising a fourth isothermal segment, a fifth constant heating rate segment and a sixth isothermal segment, and simultaneously measuring the first differential temperature using the first differential temperature measurement detector and the second differential temperature using the second differential temperature measurement detector; and
d) calculating the sensor sample thermal resistance, the sensor reference thermal resistance, the sensor sample thermal capacitance and the sensor reference thermal capacitance.

**19.** The method of claim 18, wherein the constant heating rate for the fifth constant heating rate segment is equal to the constant heating rate for the second constant heating rate segment.

**20.** The method of claim 18, further comprising calculating a time constant for the sample position and a time constant for the reference position according to:

$$\tau_s = \frac{\Delta T_0}{\left(\dfrac{dT_s}{d\tau}\right)}$$

$$\tau_r = \frac{\Delta T_0 + \Delta T}{\left(\dfrac{dT_s}{d\tau}\right) - \left(\dfrac{d\Delta T}{d\tau}\right)}$$

respectively.

**21.** The method of claim 20, wherein the sample thermal capacitance is calculated from:

$$C_s = \frac{m_s \cdot Cmat}{\frac{\Delta T_0}{\left(\frac{dT_s}{d\tau}\right) \cdot \tau_s} - 1}$$

wherein $m_s$ is the mass of the second sample calibration sample and $C_{mat}$ is the known specific heat of the second sample calibration sample.

**22.** The method of claim 18, wherein the sensor reference thermal capacitance is calculated from:

$$C_r = \frac{m_r \cdot C_{mat}}{\frac{\Delta T_0 + \Delta T}{\left(\frac{dT_s}{d\tau} - \frac{d\Delta T}{d\tau}\right) \cdot \tau_r} - 1}$$

wherein $m_r$ is the mass of the second reference calibration sample and $C_{mat}$ is the known specific heat of the second reference calibration sample.

**23.** The method of claim 22, wherein the sample thermal resistance is calculated from $R_s = \frac{\tau_s}{C_s}$ and the reference thermal resistance is calculated from $R_r = \frac{\tau_r}{C_r}$.

**24.** The method of claim 1, wherein, for a heat flux differential scanning calorimeter, the steps of calibrating the sensor comprises:

a) running a first experiment comprising a first isothermal segment, a second constant heating rate segment and a third isothermal segment with an empty differential scanning calorimeter cell, and measuring a first differential temperature using the first differential temperature measurement detector and a second differential temperature using the second differential temperature measurement detector;
b) placing a sample calibration sample on a sample position of the differential scanning calorimeter and a reference calibration sample on a reference position of the differential scanning calorimeter;
c) running a second experiment comprising a fourth isothermal segment, a fifth constant heating rate segment and a sixth isothermal segment, and simultaneously measuring the first differential temperature using the first differential temperature measurement detector and the second differential temperature using the second differential temperature measurement detector; and
d) calculating the sensor sample thermal resistance, the sensor reference thermal resistance, the sensor sample thermal capacitance and the sensor reference thermal capacitance.

**25.** The method of claim 24, further comprising calculating a sample time constant and a reference time constant.

**26.** The method of claim 24, wherein the sample thermal capacitance is calculated from:

$$C_s = \frac{m_s \cdot Cmat}{\frac{\Delta T_0}{\left(\frac{dT_s}{d\tau}\right) \cdot \tau_s} - 1}$$

wherein $m_s$ is the mass of the sample calibration sample and $C_{mat}$ is the known specific heat of the sample calibration sample.

**27.** The method of claim 25, wherein the sensor reference thermal capacitance is calculated from:

$$C_r = \frac{m_r \cdot C_{mat}}{\dfrac{\Delta T_0 + \Delta T}{\left(\dfrac{dT_s}{d\tau} - \dfrac{d\Delta T}{d\tau}\right) \cdot \tau_r} - 1}$$

wherein $m_r$ is the mass of the second reference calibration sample and $C_{mat}$ is the known specific heat of the second reference calibration sample.

**28.** The method of claim 1, wherein a calorimeter having a reference position and a sample position for a predetermined operating temperature range, the steps of calibrating the sensor comprises:

a) running a first experiment with nothing on the sample position or on the reference position, said first experiment comprising the steps of:

i) sensing at least one absolute temperature and two differential temperatures;
ii) maintaining a steady temperature below the operating temperature range;
iii) heating the calorimeter at a first constant heating rate to a temperature above the operating range;
iv) determining at least one time constant;

b) running a second experiment with a calibration sample on at least one of the sample position and the reference position comprising the steps of:

i) sensing at least one absolute temperature and two differential temperatures;
ii) maintaining a steady temperature below the operating temperature range;
iii) heating the calorimeter at a second constant heating rate to a temperature above the operating range; and
iv) determining at least one capacitance and at least one resistance.

**29.** The method of claim 28, wherein the second experiment comprises placing a sample calibration sample on the sample position and a reference calibration sample on the reference position.

**30.** The method of claim 29, wherein the calibration samples are sapphire calibration samples.

**31.** The method of claim 29, wherein the time constant determined in the first experiment is the sample time constant and it is determined in step a(iv) according to:

$$\tau_s = \frac{\Delta T_0}{\left(\dfrac{dT_s}{d\tau}\right)}.$$

**32.** The method of claim 31, wherein the capacitance determined in the second experiment is the sample thermal capacitance and the sample thermal capacitance is determined in step b(iv) according to:

$$C_s = \frac{m_s \cdot Cmat}{\dfrac{\Delta T_0}{\left(\dfrac{dT_s}{d\tau}\right) \cdot \tau_s} - 1}.$$

**33.** The method of claim 28, wherein the steady temperature in step (a)(ii) is maintained for a sufficiently long period of time to permit equilibration of the calorimeter.

**34.** The method of claim 1, wherein a calorimeter having a reference position and a sample position for a predetermined operating temperature range, the steps of calibrating the sensor comprises:

a) running a first experiment with a sample calibration sample on the sample position and a reference calibration sample on the reference position, said first experiment comprising the steps of:

i) sensing at least one absolute temperature and two differential temperatures;
ii) maintaining a steady temperature below the operating temperature range;
iii) heating the calorimeter at a first constant heating rate to a temperature above the operating range;
iv) determining at least one time constant;

b) running a second experiment with the sample calibration sample on the sample position and the reference calibration sample on the reference position comprising the steps of:

i) sensing at least one absolute temperature and two differential temperatures;
ii) maintaining a steady temperature below the operating temperature range;
iii) heating the calorimeter at a second constant heating rate to a temperature above the operating range; and
iv) determining at least one sensor capacitance and at least one sensor resistance,

wherein the first constant heating rate differs substantially from the second constant heating rate.

**35.** The method of claim 34, wherein the second heating rate is at least about twice as high as the first heating rate.

**36.** The method of claim 34, wherein the calibration samples are sapphire calibration samples.

**37.** The method of claim 34, further comprising controlling the power to the oven based upon the absolute temperature.

**38.** The method of claim 34, wherein the at least one time constant, the at least one thermal resistance and the at least one thermal capacitance are determined based upon the four-term heat flow equation.

**39.** The method according to claim 2, for reducing relative errors in absolute temperature measurements due to differences in temperature sensors used in a heat flux differential scanning calorimeter further including steps of: ; and

d) determining at least one time constant, $C_i$ at least one thermal resistance ($R_s$,$R_r$) and at least one thermal capacitance $C_s$, $C_r$, based upon said four-term heat flow equation.

**40.** The method of claim 39, wherein the method provides a temperature deviation at the sample position for an indium sample placed on the reference position of less than about 1.5% of a second temperature deviation at the sample position for an indium sample placed on the sample position.

**41.** The method of claim 39, wherein measuring the temperature of the base comprises taking a single absolute temperature measurement.

**42.** The method of claim 39, wherein measuring the differential temperature measurement between the sample position and the base comprises using a sample area temperature detector.

**43.** The method of claim 39, wherein measuring the differential temperature measurement between the sample position and the reference position comprises using a reference area temperature detector.

**44.** The method of claim 39, wherein a temperature of the sample position is determined by subtracting the differential temperature between the sample position and the base from the temperature of the base.

**45.** A sensor for a heat flux differential scanning calorimeter comprising:

a) a sample platform (1) mounted on the top of a sample cylindrical tube (2), said tube having a cylindrical wall thickness;
b) a reference platform (4) mounted on top of a reference cylindrical tube (5), said tube having a cylindrical wall thickness;
c) a base (3) attached to the bottom of the sample cylindrical tube and the bottom of the reference cylindrical tube; and

d) base thermocouple (12,13,14) for measuring an absolute temperature at a base position on the base, a first differential thermocouple configuration (9,13) for measuring the differential temperature ($\Delta T_0$) at the sample platform with respect to the base, and a second differential thermocouple configuration (9,11) for measuring the differential temperature ($\Delta T$) at the sample platform with respect to the reference platform.

**46.** The sensor of claim 45, wherein the height of the sample and reference cylindrical tubes is selected to increase the sensitivity of the instrument.

**47.** The sensor of claim 45, wherein the height of the sample and reference cylindrical tubes is decreased to increase the resolution of the instrument.

**48.** The sensor of claim 45, wherein the aspect ratio of the sample cylinder is between 9,8 and 13,8 $mm^{-1}$ (25 and 35 $inches^{-1}$).

**49.** The sensor of claim 45, wherein the sample and reference cylindrical tubes are made of constantan.

**50.** The sensor of claim 45, wherein the first differential thermocouple configuration comprises an area detector welded concentrically to the underside of the sample platform.

**51.** The sensor of claim 45, wherein the height of the sample cylindrical tube is between 0,51 and 1,27 mm (0.02 and 0.5 inches).

**Patentansprüche**

**1.** Verfahren zum Berechnen eines Wärmestroms ($q_{ss}$) zu einer Probe in einem Differentialabtastkalorimeter mit einem Sensor umfassend eine Basis (3), einer zum Aufnehmen einer Probenpfanne konfigurierten Probenplattform (1) und einer zum Aufnehmen einer Referenzpfanne konfigurierten Referenzplattform (4), mithilfe

- einer von einem Basisthermoelement (12; 13, 14) durchgeführten Absoluttemperaturmessung ($T_0$) der Temperatur einer Basisposition des Kalorimeters,
- einer ersten Differentialtemperaturmessung ($\Delta T_0$) mithilfe einer ersten Differentialthermoelementkonfiguration (9, 13), wodurch die Differentialtemperatur an besagter Probenplattform ($T_s$) mit Bezug auf die Basis ($T_o$) gemessen wird, und
- einer zweiten Differentialtemperaturmessung ($\Delta T$), mithilfe einer zweiten Differentialthermoelementkonfiguration (9, 11), wodurch die Differentialtemperatur von besagter Probenplattform ($T_s$) mit Bezug auf die Referenzplattform ($T_r$) gemessen wird; wobei das Verfahren die folgenden Schritte umfasst:

a) Kalibrieren des Sensors;
b) Betreiben des Differentialabtastkalorimeters; und
c) Berechnen des Wärmestroms ($q_{ss}$) zur Probe.

**2.** Verfahren nach Anspruch 1, worin der Wärmestrom zur Probe gemäß

$$q_{ss} = q_s - q_r \cdot \frac{m_{ps}}{m_{pr}} \cdot \frac{\frac{dT_{ps}}{d\tau}}{\frac{dT_{pr}}{d\tau}} + \frac{m_{ps}}{m_{pr}} \cdot m_{rs} \cdot c_{rs} \cdot \frac{dT_{ps}}{d\tau}$$

oder einem thermodynamisch äquivalenten Ausdruck berechnet wird und wobei gilt:

$q_s$ ist der Wärmestrom zur Probe und zur Probenpfanne,
$q_r$ ist der Wärmestrom zur Referenz und zur Referenzpfanne,
$m_{ps}$ ist die Masse der Probenpfanne,
$m_{pr}$ ist die Masse der Referenzpfanne,
$T_{ps}$ ist die Probenpfannentemperatur,

$T_{pr}$ ist die Referenzpfannentemperatur,
$m_{rs}$ ist die Masse eines Referenzmaterials,
$C_{rs}$ ist die spezifische Wärme des Referenzmaterials, und
*T* repräsentiert Zeit.

**3.** Verfahren nach Anspruch 1 oder 2, worin die Referenzpfanne leer ist, sodass der Wärmestrom zur Probe gemäß Folgendem berechnet wird:

$$q_{ss} = q_s - q_r \cdot \frac{m_{ps} \cdot \frac{dT_{ps}}{d\tau}}{m_{pr} \cdot \frac{dT_{pr}}{d\tau}}$$

**4.** Verfahren nach irgendeinem Anspruch 1 bis 3, umfassend das Bestimmen der Proben- bzw. Referenzpfannentemperaturen $T_{ps}$ bzw. $T_{pr}$ gemäß:

$$T_{ps} = T_s - q_s \cdot R_{ps} \quad \text{and} \quad T_{pr} = T_r - q_r \cdot R_{pr}$$

wobei $R_{ps}$ und $R_{pr}$ die thermischen Widerstände der Probenpfanne bzw. der Referenzpfanne sind, $T_s$, $T_r$ die Temperaturen der Proben- und Referenzplattformen sind und $T_r$ die Temperatur der Referenzplattform ist.

**5.** Verfahren nach irgendeinem Anspruch 1 bis 4, ferner umfassend

c) den Schritt des Berücksichtigens der Proben- und Referenzpfannen-Wärmeströme und Berechnens des Wärmestroms zur Probe.

**6.** Verfahren nach Anspruch 6, worin Schritt c) auch das Berücksichtigen des Wärmestroms zur Referenz umfasst.

**7.** Verfahren nach irgendeinem Anspruch 4 bis 6, worin $R_{ps}$ und $R_{pr}$ mithilfe einer Modellgleichung für den Kontaktwiderstand ermittelt werden.

**8.** Verfahren nach irgendeinem der vorhergehenden Ansprüche, worin das Differentialabtastkalorimeter ein Wärmefluss-Differentialabtastkalorimeter oder ein Differentialabtastkalorimeter mit Leistungskompensation ist.

**9.** Verfahren nach Anspruch 1, worin, bei einem Wärmefluss-Differentialabtastkalorimeter, die Schritte zum Kalibrieren des Sensors Folgendes umfassen:

a) Platzieren einer ersten Probenkalibrierprobe auf einer Probenposition des Differentialabtastkalorimeters und einer ersten Referenzkalibrierprobe auf einer Referenzposition des Differentialabtastkalorimeters;
b) Ausführen eines ersten Experiments umfassend ein erstes isothermisches Segment, ein zweites Segment mit konstanter Heizrate und ein drittes isothermisches Segment, und Messen einer Absoluttemperatur mit dem Absoluttemperaturdetektor, einer ersten Differentialtemperatur mithilfe des ersten Differentialtemperaturmessdetektors und einer zweiten Differentialtemperatur mithilfe des zweiten Differentialtemperaturmessdetektors;
c) Platzieren einer zweiten Probenkalibrierprobe auf einer Probenposition des Differentialabtastkalorimeters und einer zweiten Referenzkalibrierprobe auf einer Referenzposition des Differentialabtastkalorimeters;
d) Ausführen eines zweiten Experiments umfassend das erste isothermische Segment, das zweite Segment mit konstanter Heizrate und das dritte isothermische Segment, und Messen der Absoluttemperatur mit dem Absoluttemperaturdetektor, der ersten Differentialtemperatur mithilfe des ersten Differentialtemperaturmessdetektors und der zweiten Differentialtemperatur mithilfe des zweiten Differentialtemperaturmessdetektors; und
e) Berechnen des thermischen Widerstands der Sensorprobe, des thermischen Widerstands der Sensorreferenz, der thermischen Kapazität der Sensorprobe und die thermischen Kapazität der Sensorreferenz.

**10.** Verfahren nach Anspruch 9, worin die thermische Kapazität der Sensorprobe $C_s$ und der thermische Widerstand der Sensorprobe $R_s$ gemäß Folgendem berechnet werden

$$C_s = \frac{\Delta T_{0}{}_1 \cdot q_{s2} - \Delta T_{0}{}_2 \cdot q_{s1}}{\Delta T_{0}{}_2 \frac{dT_{s1}}{d\tau} - \Delta T_{0}{}_1 \frac{dT_{s2}}{d\tau}}$$

$$R_s = \frac{\Delta T_{0}{}_2 \cdot \frac{dT_{s1}}{d\tau} - \Delta T_{0}{}_1 \cdot \frac{dT_{s2}}{d\tau}}{q_{s2} \cdot \frac{dT_{s1}}{d\tau} - q_{s1} \cdot \frac{dT_{s2}}{d\tau}}$$

worin die Tiefzahlen 1 und 2 besagte erste und zweite Kalibrierexperimente angeben.

**11.** Verfahren nach Anspruch 10, worin die thermische Kapazität der Sensorreferenz $C_r$ und der thermische Widerstand der Sensorreferenz $R_r$ gemäß Folgendem berechnet werden

$$R_r = \frac{(\Delta T_{0}{}_2 + \Delta T_2) \cdot \left(\frac{dT_{s1}}{d\tau} - \frac{d\Delta T_1}{d\tau}\right) - (\Delta T_{0}{}_1 + \Delta T_1) \cdot \left(\frac{dT_{s2}}{d\tau} - \frac{d\Delta T_2}{d\tau}\right)}{q_{r2} \cdot \left(\frac{dT_{s1}}{d\tau} - \frac{d\Delta T_1}{d\tau}\right) - q_{r1} \cdot \left(\frac{dT_{s2}}{d\tau} - \frac{d\Delta T_2}{d\tau}\right)}$$

$$C_r = \frac{(\Delta T_{0}{}_1 + \Delta T_1) \cdot q_{r2} - (\Delta T_{0}{}_2 + \Delta T_2) \cdot q_{r1}}{(\Delta T_{0}{}_2 + \Delta T_2) \cdot \left(\frac{dT_{s1}}{d\tau} - \frac{d\Delta T_1}{d\tau}\right) - (\Delta T_{0}{}_1 + \Delta T_1) \cdot \left(\frac{dT_{s2}}{d\tau} - \frac{d\Delta T_2}{d\tau}\right)}$$

**12.** Verfahren nach Anspruch 1, worin der Schritt des Kalibrierens des Sensors ein erstes Experiment mit einer leeren Differentialabtastkalorimeterzelle umfasst.

**13.** Verfahren nach Anspruch 12, worin der Schritt des Kalibrierens des Sensors ein zweites Experiment mithilfe einer Probenkalibrierprobe aufweisend Masse $m_s$ und einer Referenzkalibrierprobe aufweisend Masse $m_r$ umfasst.

**14.** Verfahren nach Anspruch 1, worin der Schritt des Kalibrierens des Sensors eine Saphir-Probenkalibrierprobe und eine Saphir-Referenzkalibrierprobe nutzt.

**15.** Verfahren nach Anspruch 1, worin der Schritt des Kalibrierens des Sensors das Berechnen von Sensorproben- und -referenzzeitkonstanten umfasst.

**16.** Verfahren nach Anspruch 9, worin der Schritt des Kalibrierens des Sensors das Berechnen der thermischen Kapazität der Sensorprobe gemäß Folgendem umfasst:

$$C_s = \frac{m_s \cdot Cmat}{\frac{\Delta T_0}{\left(\frac{dT_s}{d\tau}\right) \cdot \tau_s} - 1}$$

worin $C_{mat}$ die bekannte spezifische Wärme der Kalibrierprobe ist.

**17.** Verfahren nach Anspruch 9, worin der Schritt des Kalibrierens des Sensors das Berechnen der thermischen Kapazität der Sensorreferenz gemäß Folgendem umfasst:

$$C_r = \frac{m_r \cdot C_{mat}}{\dfrac{\Delta T_0 + \Delta T}{\left(\dfrac{dT_s}{d\tau} - \dfrac{d\Delta T}{d\tau}\right) \cdot \tau_r} - 1}$$

worin $C_{mat}$ die bekannte spezifische Wärme der Kalibrierprobe ist.

**18.** Verfahren nach Anspruch 1, worin, bei einem Wärmefluss-Differentialabtastkalorimeter, die Schritte zum Kalibrieren des Sensors Folgendes umfassen:

a) Ausführen eines ersten Experiments umfassend ein erstes isothermisches Segment, ein zweites Segment mit konstanter Heizrate und ein drittes isothermisches Segment mit einer leeren Differentialabtastkalorimeterzelle, und Messen einer ersten Differentialtemperatur mithilfe des ersten Differentialtemperaturmessdetektors und einer zweiten Differentialtemperatur mithilfe des zweiten Differentialtemperaturmessdetektors;
b) Platzieren einer Probenkalibrierprobe auf einer Probenposition des Differentialabtastkalorimeters und einer Referenzkalibrierprobe auf einer Referenzposition des Differentialabtastkalorimeters;
c) Ausführen eines zweiten Experiments umfassend ein viertes isothermisches Segment, ein fünftes Segment mit konstanter Heizrate und ein sechstes isothermisches Segment, und gleichzeitiges Messen der ersten Differentialtemperatur mithilfe des ersten Differentialtemperaturmessdetektors und der zweiten Differentialtemperatur mithilfe des zweiten Differentialtemperaturmessdetektors; und
d) Berechnen des thermischen Widerstands der Sensorprobe, des thermischen Widerstands der Sensorreferenz, der thermischen Kapazität der Sensorprobe und der thermischen Kapazität der Sensorreferenz.

**19.** Verfahren nach Anspruch 18, worin die konstante Heizrate für das fünfte Segment mit konstanter Heizrate gleich der konstanten Heizrate für das zweite Segment mit konstanter Heizrate ist.

**20.** Verfahren nach Anspruch 18, ferner umfassend Berechnen einer Zeitkonstanten für die Probenposition und einer Zeitkonstanten für die Referenzposition gemäß:

$$\tau_s = \frac{\Delta T_0}{\left(\dfrac{dT_s}{d\tau}\right)}$$

$$\tau_r = \frac{\Delta T_0 + \Delta T}{\left(\dfrac{dT_s}{d\tau}\right) - \left(\dfrac{d\Delta T}{d\tau}\right)}$$

bzw.

**21.** Verfahren nach Anspruch 20, worin die thermische Kapazität der Probe aus Folgendem berechnet wird:

$$C_s = \frac{m_s \cdot Cmat}{\dfrac{\Delta T_0}{\left(\dfrac{dT_s}{d\tau}\right) \cdot \tau_s} - 1}$$

worin $m_s$ die Masse der zweiten Probenkalibrierprobe ist und $C_{mat}$ die bekannte spezifische Wärme der zweiten Probenkalibrierprobe ist.

**22.** Verfahren nach Anspruch 18, worin die thermische Kapazität der Sensorreferenz aus Folgendem berechnet wird:

$$C_r = \frac{m_r \cdot C_{mat}}{\dfrac{\Delta T_0 + \Delta T}{\left(\dfrac{dT_s}{d\tau} - \dfrac{d\Delta T}{d\tau}\right) \cdot \tau_r} - 1}$$

worin $m_r$ die Masse der zweiten Referenzkalibrierprobe ist und $C_{mat}$ die bekannte spezifische Wärme der zweiten Referenzkalibrierprobe ist.

**23.** Verfahren nach Anspruch 22, worin der thermische Widerstand der Probe aus $R_s = \frac{\tau_s}{C_s}$ berechnet wird und der thermische Widerstand der Referenz aus $R_r = \frac{\tau_r}{C_r}$. berechnet wird.

**24.** Verfahren nach Anspruch 1, worin, bei einem Wärmefluss-Differentialabtastkalorimeter, die Schritte zum Kalibrieren des Sensors Folgendes umfassen:

a) Ausführen eines ersten Experiments umfassend ein erstes isothermisches Segment, ein zweites Segment mit konstanter Heizrate und ein drittes isothermisches Segment mit einer leeren Differentialabtastkalorimeterzelle, und Messen einer ersten Differentialtemperatur mithilfe des ersten Differentialtemperaturmessdetektors und einer zweiten Differentialtemperatur mithilfe des zweiten Differentialtemperaturmessdetektors;
b) Platzieren einer Probenkalibrierprobe auf einer Probenposition des Differentialabtastkalorimeters und einer Referenzkalibrierprobe auf einer Referenzposition des Differentialabtastkalorimeters;
c) Ausführen eines zweiten Experiments umfassend ein viertes isothermisches Segment, ein fünftes Segment mit konstanter Heizrate und ein sechstes isothermisches Segment, und gleichzeitiges Messen der ersten Differentialtemperatur mithilfe des ersten Differentialtemperaturmessdetektors und der zweiten Differentialtemperatur mithilfe des zweiten Differentialtemperaturmessdetektors; und
d) Berechnen des thermischen Widerstands der Sensorprobe, des thermischen Widerstands der Sensorreferenz, der thermischen Kapazität der Sensorprobe und der thermischen Kapazität der Sensorreferenz.

**25.** Verfahren nach Anspruch 24, ferner umfassend das Berechnen einer Probenzeitkonstanten und einer Referenzzeitkonstanten.

**26.** Verfahren nach Anspruch 24, worin die thermische Kapazität der Probe aus Folgendem berechnet wird:

$$C_s = \frac{m_s \cdot Cmat}{\dfrac{\Delta T_0}{\left(\dfrac{dT_s}{d\tau}\right) \cdot \tau_s} - 1}$$

worin $m_s$ die Masse der Probenkalibrierprobe ist und $C_{mat}$ die bekannte spezifische Wärme der Probenkalibrierprobe ist.

**27.** Verfahren nach Anspruch 25, worin die thermische Kapazität der Sensorreferenz aus Folgendem berechnet wird:

$$C_r = \frac{m_r \cdot C_{mat}}{\dfrac{\Delta T_0 + \Delta T}{\left(\dfrac{dT_s}{d\tau} - \dfrac{d\Delta T}{d\tau}\right) \cdot \tau_r} - 1}$$

worin $m_r$ die Masse der zweiten Referenzkalibrierprobe ist und $C_{mat}$ die bekannte spezifische Wärme der zweiten Referenzkalibrierprobe ist.

**28.** Verfahren nach Anspruch 1, worin, bei einem Kalorimeter mit einer Referenzposition und einer Probenposition für

einen vorbestimmten Betriebstemperaturbereich, die Schritte zum Kalibrieren des Sensors Folgendes umfassen:

a) Ausführen eines ersten Experiments mit nichts auf der Probenposition oder auf der Referenzposition, wobei besagtes erstes Experiment die folgenden Schritte umfasst:

i) Erfassen mindestens einer Absoluttemperatur und zweier Differentialtemperaturen;
ii) Beibehalten einer stetigen Temperatur unterhalb des Betriebstemperaturbereichs;
iii) Erhitzen des Kalorimeters mit einer ersten konstanten Heizrate auf eine Temperatur oberhalb des Betriebsbereichs;
iv) Bestimmen mindestens einer Zeitkonstanten;

b) Ausführen eines zweiten Experiments mit einer Kalibrierprobe auf mindestens einer der Probenposition und der Referenzposition, umfassend die folgenden Schritte:

i) Erfassen mindestens einer Absoluttemperatur und zweier Differentialtemperaturen;
ii) Beibehalten einer stetigen Temperatur unterhalb des Betriebstemperaturbereichs;
iii) Erhitzen des Kalorimeters mit einer zweiten konstanten Heizrate auf eine Temperatur oberhalb des Betriebsbereichs; und
iv) Bestimmen mindestens einer Kapazität und mindestens eines Widerstands.

**29.** Verfahren nach Anspruch 28, worin das zweite Experiment das Platzieren einer Probenkalibrierprobe auf der Probenposition und einer Referenzkalibrierprobe auf der Referenzposition umfasst.

**30.** Verfahren nach Anspruch 29, worin die Kalibrierproben Saphir-Kalibrierproben sind.

**31.** Verfahren nach Anspruch 29, worin die im ersten Experiment bestimmte Zeitkonstante die Probenzeitkonstante ist und sie in Schritt a(iv) gemäß Folgendem bestimmt wird:

$$\tau_s = \frac{\Delta T_0}{\left(\frac{dT_s}{d\tau}\right)}.$$

**32.** Verfahren nach Anspruch 31, worin die im zweiten Experiment bestimmte Kapazität die thermische Kapazität der Probe ist und die thermische Kapazität der Probe in Schritt b(iv) gemäß Folgendem bestimmt wird:

$$C_s = \frac{m_s \cdot Cmat}{\frac{\Delta T_0}{\left(\frac{dT_s}{d\tau}\right)\cdot \tau_s} - 1}.$$

**33.** Verfahren nach Anspruch 28, worin die stetige Temperatur in Schritt (a)(ii) für einen ausreichend langen Zeitraum beibehalten wird, um Äquilibrierung des Kalorimeters zu gestatten.

**34.** Verfahren nach Anspruch 1, worin, bei einem Kalorimeter mit einer Referenzposition und einer Probenposition für einen vorbestimmten Temperaturbereich, die Schritte zum Kalibrieren des Sensors Folgendes umfassen:

a) Ausführen eines ersten Experiments mit einer Probenkalibrierprobe auf der Probenposition und einer Referenzkalibrierprobe auf der Referenzposition, wobei besagtes erstes Experiment die folgenden Schritte umfasst:

i) Erfassen mindestens einer Absoluttemperatur und zweier Differentialtemperaturen;
ii) Beibehalten einer stetigen Temperatur unterhalb des Betriebstemperaturbereichs;
iii) Erhitzen des Kalorimeters mit einer ersten konstanten Heizrate auf eine Temperatur oberhalb des Betriebsbereichs;

iv) Bestimmen mindestens einer Zeitkonstanten;

b) Ausführen eines zweiten Experiments mit der Probenkalibrierprobe auf der Probenposition und der Referenzkalibrierprobe auf der Referenzposition, umfassend die folgenden Schritte:

i) Erfassen mindestens einer Absoluttemperatur und zweier Differentialtemperaturen;
ii) Beibehalten einer stetigen Temperatur unterhalb des Betriebstemperaturbereichs;
iii) Erhitzen des Kalorimeters mit einer zweiten konstanten Heizrate auf eine Temperatur oberhalb des Betriebsbereichs; und
iv) Bestimmen mindestens einer Sensorkapazität und mindestens eines Sensorwiderstands,

worin sich die erste konstante Heizrate wesentlich von der zweiten konstanten Heizrate unterscheidet.

**35.** Verfahren nach Anspruch 34, worin die zweite Heizrate mindestens etwa zweimal so hoch wie die erste Heizrate ist.

**36.** Verfahren nach Anspruch 34, worin die Kalibrierproben Saphir-Kalibrierproben sind.

**37.** Verfahren nach Anspruch 34, ferner umfassend das Kontrollieren der Leistung zum Ofen auf Basis der Absoluttemperatur.

**38.** Verfahren nach Anspruch 34, worin die mindestens eine Zeitkonstante, der mindestens eine thermische Widerstand und die mindestens eine thermische Kapazität auf Basis der Wärmestromgleichung mit vier Ausdrücken bestimmt werden.

**39.** Verfahren nach Anspruch 2 zum Reduzieren relativer Fehler bei Absoluttemperaturmessungen aufgrund von Unterschieden bei in einem Wärmefluss-Differentialabtastkalorimeter verwendeten Temperatursensoren, ferner beinhaltend die folgenden Schritte:

Bestimmen mindestens einer Zeitkonstanten $_{t1}$, mindestens eines thermischen Widerstands ($R_s$, $R_r$) und mindestens einer thermischen Kapazität Cs, Cr auf Basis von besagter Wärmestromgleichung mit vier Ausdrücken.

**40.** Verfahren nach Anspruch 39, worin das Verfahren eine Temperaturabweichung an der Probenposition bei einer Indium-Probe, die auf der Referenzposition platziert ist, von weniger als etwa 1,5 % einer zweiten Temperaturabweichung an der Probenposition bei einer Indium-Probe, die auf der Probenposition platziert ist, vorsieht.

**41.** Verfahren nach Anspruch 39, worin das Messen der Temperatur der Basis das Durchführen einer einzigen Absoluttemperaturmessung umfasst.

**42.** Verfahren nach Anspruch 39, worin das Messen der Differentialtemperatur zwischen der Probenposition und der Basis die Verwendung eines Probenbereichs-Temperaturdetektors umfasst.

**43.** Verfahren nach Anspruch 39, worin das Messen der Differentialtemperatur zwischen der Probenposition und der Referenzposition die Verwendung eines Referenzbereichs-Temperaturdetektors umfasst.

**44.** Verfahren nach Anspruch 39, worin eine Temperatur der Probenposition durch Subtrahieren der Differentialtemperatur zwischen der Probenposition und der Basis von der Temperatur der Basis bestimmt wird.

**45.** Sensor für ein Wärmefluss-Differentialabtastkalorimeter, umfassend:

a) eine Probenplattform (1), die oben auf einem zylindrischen Probenrohr (2) montiert ist, wobei besagtes Rohr eine zylindrische Wandstärke aufweist;
b) eine Referenzplattform (4), die oben auf einem zylindrischen Referenzrohr (5), montiert ist, wobei besagtes Rohr eine zylindrische Wandstärke aufweist;
c) eine Basis (3), die am Boden des zylindrischen Probenrohrs und am Boden des zylindrischen Referenzrohrs befestigt ist; und
d) Basisthermoelement (12, 13, 14) zum Messen einer Absoluttemperatur an einer Basisposition auf der Basis, eine erste Differentialthermoelementkonfiguration (9, 13) zum Messen der Differentialtemperatur ($\Delta T_o$) an der Probenplattform mit Bezug auf die Basis und eine zweite Differentialthermoelementkonfiguration (9, 11) zum

Messen der Differentialtemperatur ($\Delta T$) an der Probenplattform mit Bezug auf die Referenzplattform.

**46.** Sensor nach Anspruch 45, worin die Höhe der zylindrischen Proben- und Referenzrohre ausgewählt wird, um die Empfindlichkeit des Instruments zu erhöhen.

**47.** Sensor nach Anspruch 45, worin die Höhe der zylindrischen Proben- und Referenzrohre verringert wird, um die Auflösung des Instruments zu erhöhen.

**48.** Sensor nach Anspruch 45, worin das Seitenverhältnis des Probenzylinders zwischen 9,8 und 13,8 $mm^{-1}$ (25 und 35 $Zoll^{-1}$) liegt.

**49.** Sensor nach Anspruch 45, worin die zylindrischen Proben- und Referenzrohre aus Konstantan bestehen.

**50.** Sensor nach Anspruch 45, worin die erste Differentialthermoelementkonfiguration einen Bereichsdetektor umfasst, der konzentrisch an die Unterseite der Probenplattform geschweißt ist.

**51.** Sensor nach Anspruch 45, worin die Höhe des zylindrischen Probenrohrs zwischen 0,51 und 1,27 mm (0,02 und 0,5 Zoll) liegt.

## Revendications

**1.** Procédé de calcul d'un flux de chaleur ($q_{ss}$) vers un échantillon dans un calorimètre différentiel à balayage comportant un capteur comprenant une base (3), une plateforme à échantillon (1) conçue pour recevoir un collecteur à échantillon, et une plateforme de référence (4) conçue pour recevoir un collecteur de référence, ledit procédé utilisant :

- une mesure de température absolue ($T_0$) de la température d'une position de base du calorimètre prise par un thermocouple de base (12, 13, 14) ;
- une première mesure de température différentielle ($\Delta T_0$) utilisant une première configuration de thermocouple différentiel (9, 13) mesurant la température différentielle au niveau de ladite plateforme à échantillon ($T_s$) par rapport à la base ($T_0$), et
- une seconde mesure de température différentielle ($\Delta T$) utilisant une seconde configuration de thermocouple différentiel (9, 11) mesurant la température différentielle de ladite plateforme à échantillon ($T_s$) par rapport à la plateforme de référence ($T_r$) ; le procédé comprenant les étapes consistant à :

a) étalonner le capteur ;
b) faire fonctionner le calorimètre différentiel à balayage ; et
c) calculer le flux de chaleur ($q_{ss}$) vers l'échantillon.

**2.** Procédé selon la revendication 1, dans lequel le flux de chaleur vers l'échantillon est calculé selon l'expression :

$$q_{ss} = q_s - q_r \cdot \frac{m_{ps}}{m_{pr}} \cdot \frac{\frac{dT_{ps}}{d\tau}}{\frac{dT_{pr}}{d\tau}} + \frac{m_{ps}}{m_{pr}} \cdot m_{rs} \cdot c_{rs} \cdot \frac{dT_{ps}}{d\tau}$$

ou une expression équivalente d'un point de vue thermodynamique,

et dans laquelle
$q_s$ est le flux de chaleur vers l'échantillon et vers le collecteur à échantillon,
$q_r$ est le flux de chaleur vers la référence et vers le collecteur de référence,
$m_{ps}$ est la masse du collecteur à échantillon,
$m_{pr}$ est la masse du collecteur de référence,
$T_{ps}$ est la température du collecteur à échantillon,
$T_{pr}$ est la température du collecteur de référence,
$m_{rs}$ est la masse du produit de référence,

$c_{rs}$ est la chaleur spécifique du produit de référence, et

t représente le temps.

**3.** Procédé selon la revendication 1 ou 2, dans lequel le collecteur de référence est vide de sorte que le flux de chaleur vers l'échantillon est calculé selon l'expression :

$$q_{ss} = q_s - q_r \cdot \frac{m_{ps} \cdot \frac{dT_{ps}}{d\tau}}{m_{pr} \cdot \frac{dT_{pr}}{d\tau}}$$

**4.** Procédé selon l'une quelconque des revendications 1 à 3, consistant à déterminer la température respective des collecteurs à échantillon et de référence $T_{ps}$ et $T_{pr}$ selon l'expression :

$$T_{ps} = T_s - q_s \cdot R_{ps} \quad \text{and} \quad T_{pr} = T_r - q_r \cdot R_{pr}$$

où $R_{ps}$ et $R_{pr}$ sont respectivement les résistances thermiques du collecteur à échantillon et du collecteur de référence, $T_s$ et $T_r$ sont respectivement les températures des plateformes à échantillon et de référence, et $T_r$ est la température de la plateforme de référence.

**5.** Procédé selon l'une quelconque des revendications 1 à 4, comprenant en outre l'étape consistant à :

c) tenir compte des flux de chaleur des collecteurs à échantillon et de référence, et calculer le flux de chaleur vers l'échantillon.

**6.** Procédé selon la revendication 6, dans lequel l'étape c) consiste également à tenir compte du flux de chaleur vers la référence.

**7.** Procédé selon l'une quelconque des revendications 4 à 6, dans lequel $R_{ps}$ et $R_{pr}$ sont obtenues au moyen d'une équation de modélisation pour résistance de contact.

**8.** Procédé selon l'une quelconque des revendications précédentes, dans lequel le calorimètre différentiel à balayage est un calorimètre différentiel à balayage de flux de chaleur ou un calorimètre différentiel à balayage à compensation de puissance.

**9.** Procédé selon la revendication 1, dans lequel, pour un calorimètre différentiel à balayage de flux de chaleur, les étapes d'étalonnage du capteur consistent à :

a) placer un premier échantillon d'étalonnage d'échantillon sur une position d'échantillon du calorimètre différentiel à balayage, et un premier échantillon d'étalonnage de référence sur une position de référence du calorimètre différentiel à balayage ;
b) effectuer une première expérience comprenant un premier segment isothermique, un deuxième segment à vitesse de chauffage constante et un troisième segment isothermique, et mesurer une température absolue à l'aide du détecteur de température absolue, une première température différentielle à l'aide du premier détecteur de mesure de température différentielle, et une seconde température différentielle à l'aide du second détecteur de mesure de température différentielle ;
c) placer un second échantillon d'étalonnage d'échantillon sur une position d'échantillon du calorimètre différentiel à balayage, et un second échantillon d'étalonnage de référence sur une position de référence du calorimètre différentiel à balayage ;
d) effectuer une seconde expérience comprenant le premier segment isothermique, le deuxième segment à vitesse de chauffage constante et le troisième segment isothermique, et mesurer la température absolue à l'aide du détecteur de température absolue, la première température différentielle à l'aide du premier détecteur de mesure de température différentielle, et la seconde température différentielle à l'aide du second détecteur

de mesure de température différentielle ; et

e) calculer la résistance thermique d'échantillon de capteur, la résistance thermique de référence de capteur, la capacité thermique d'échantillon de capteur et la capacité thermique de référence de capteur.

**10.** Procédé selon la revendication 9, dans lequel la capacité thermique d'échantillon de capteur $C_s$ et la résistance thermique d'échantillon de capteur $R_s$ sont calculées selon l'expression :

$$C_s = \frac{\Delta T_{0}1 \cdot q_{s2} - \Delta T_{0}2 \cdot q_{s1}}{\Delta T_{0}2 \frac{dT_{s1}}{d\tau} - \Delta T_{0}1 \frac{dT_{s2}}{d\tau}}$$

$$R_s = \frac{\Delta T_{0}2 \cdot \frac{dT_{s1}}{d\tau} - \Delta T_{0}1 \cdot \frac{dT_{s2}}{d\tau}}{q_{s2} \cdot \frac{dT_{s1}}{d\tau} - q_{s1} \cdot \frac{dT_{s2}}{d\tau}}$$

où les indices numériques 1 et 2 indiquent lesdites première et seconde expériences.

**11.** Procédé selon la revendication 10, dans lequel la capacité thermique de référence de capteur $C_r$ et la résistance thermique de référence de capteur $R_r$ sont calculées selon l'expression :

$$R_r = \frac{(\Delta T_{0}2 + \Delta T_2) \cdot \left(\frac{dT_{s1}}{d\tau} - \frac{d\Delta T_1}{d\tau}\right) - (\Delta T_{0}1 + \Delta T_1) \cdot \left(\frac{dT_{s2}}{d\tau} - \frac{d\Delta T_2}{d\tau}\right)}{q_{r2} \cdot \left(\frac{dT_{s1}}{d\tau} - \frac{d\Delta T_1}{d\tau}\right) - q_{r1} \cdot \left(\frac{dT_{s2}}{d\tau} - \frac{d\Delta T_2}{d\tau}\right)}$$

$$C_r = \frac{(\Delta T_{0}1 + \Delta T_1) \cdot q_{r2} - (\Delta T_{0}2 + \Delta T_2) \cdot q_{r1}}{(\Delta T_{0}2 + \Delta T_2) \cdot \left(\frac{dT_{s1}}{d\tau} - \frac{d\Delta T_1}{d\tau}\right) - (\Delta T_{0}1 + \Delta T_1) \cdot \left(\frac{dT_{s2}}{d\tau} - \frac{d\Delta T_2}{d\tau}\right)}$$

**12.** Procédé selon la revendication 1, dans lequel l'étape d'étalonnage du capteur comprend une première expérience avec une cellule de calorimètre différentiel à balayage vide.

**13.** Procédé selon la revendication 12, dans lequel l'étape d'étalonnage du capteur comprend une seconde expérience utilisant un échantillon d'étalonnage d'échantillon ayant une masse $m_s$ et un échantillon d'étalonnage de référence ayant une masse $m_r$.

**14.** Procédé selon la revendication 1, dans lequel l'étape d'étalonnage du capteur utilise un échantillon d'étalonnage d'échantillon de saphir et un échantillon d'étalonnage de référence de saphir.

**15.** Procédé selon la revendication 1, dans lequel l'étape d'étalonnage du capteur consiste à calculer des constantes de temps d'échantillon et de référence de capteur.

**16.** Procédé selon la revendication 9, dans lequel l'étape d'étalonnage du capteur consiste à calculer la capacité thermique d'échantillon de capteur selon l'expression :

$$C_s = \frac{m_s \cdot Cmat}{\frac{\Delta T_0}{\left(\frac{dT_s}{d\tau}\right) \cdot \tau_s} - 1}$$

où $C_{mat}$ est la chaleur spécifique connue de l'échantillon d'étalonnage.

**17.** Procédé selon la revendication 9, dans lequel l'étape d'étalonnage du capteur consiste à calculer la capacité thermique de référence de capteur selon l'expression :

$$C_r = \frac{m_r \cdot C_{mat}}{\dfrac{\Delta T_0 + \Delta T}{\left(\dfrac{dT_s}{d\tau} - \dfrac{d\Delta T}{d\tau}\right) \cdot \tau_r} - 1}$$

où $C_{mat}$ est la chaleur spécifique connue de l'échantillon d'étalonnage.

**18.** Procédé selon la revendication 1, dans lequel, pour un calorimètre différentiel à balayage de flux de chaleur, les étapes d'étalonnage du capteur consistent à :

a) effectuer une première expérience comprenant un premier segment isothermique, un deuxième segment à vitesse de chauffage constante et un troisième segment isothermique avec une cellule de calorimètre différentiel à balayage vide, et mesurer une première température différentielle à l'aide du premier détecteur de mesure de température différentielle, et une seconde température différentielle à l'aide du second détecteur de mesure de température différentielle ;
b) placer un échantillon d'étalonnage d'échantillon sur une position d'échantillon du calorimètre différentiel à balayage, et un échantillon d'étalonnage de référence sur une position de référence du calorimètre différentiel à balayage ;
c) effectuer une seconde expérience comprenant un quatrième segment isothermique, un cinquième segment à vitesse de chauffage constante et un sixième segment isothermique, et mesurer simultanément la première température différentielle à l'aide du premier détecteur de mesure de température différentielle, et la seconde température différentielle à l'aide du second détecteur de mesure de température différentielle ; et
d) calculer la résistance thermique d'échantillon de capteur, la résistance thermique de référence de capteur, la capacité thermique d'échantillon de capteur et la capacité thermique de référence de capteur.

**19.** Procédé selon la revendication 18, dans lequel la vitesse de chauffage constante du cinquième segment à vitesse de chauffage constante est égale à la vitesse de chauffage constante du deuxième segment à vitesse de chauffage constante.

**20.** Procédé selon la revendication 18, consistant en outre à calculer une constante de temps pour la position d'échantillon et une constante de temps pour la position de référence selon l'expression :

$$\tau_s = \frac{\Delta T_0}{\left(\dfrac{dT_s}{d\tau}\right)}$$

$$\tau_r = \frac{\Delta T_0 + \Delta T}{\left(\dfrac{dT_s}{d\tau}\right) - \left(\dfrac{d\Delta T}{d\tau}\right)}$$

respectivement.

**21.** Procédé selon la revendication 20, dans lequel la capacité thermique d'échantillon est calculée selon l'expression :

$$C_s = \frac{m_s \cdot Cmat}{\frac{\Delta T_0}{\left(\frac{dT_s}{d\tau}\right) \cdot \tau_s} - 1}$$

où $m_s$ est la masse du second échantillon d'étalonnage d'échantillon et $C_{mat}$ est la chaleur spécifique connue du second échantillon d'étalonnage d'échantillon.

**22.** Procédé selon la revendication 18, dans lequel la capacité thermique de référence de capteur est calculée selon l'expression :

$$C_r = \frac{m_r \cdot C_{mat}}{\frac{\Delta T_0 + \Delta T}{\left(\frac{dT_s}{d\tau} - \frac{d\Delta T}{d\tau}\right) \cdot \tau_r} - 1}$$

où $m_r$ est la masse du second échantillon d'étalonnage de référence et $C_{mat}$ est la chaleur spécifique connue du second échantillon d'étalonnage de référence.

**23.** Procédé selon la revendication 22, dans lequel la résistance thermique d'échantillon est calculée d'après $R_s = \frac{\tau_s}{C_s}$ et la résistance thermique de référence est calculée d'après $R_r = \frac{\tau_r}{C_r}$.

**24.** Procédé selon la revendication 1, dans lequel, pour un calorimètre différentiel à balayage de flux de chaleur, les étapes d'étalonnage du capteur consistent à :

a) effectuer une première expérience comprenant un premier segment isothermique, un deuxième segment à vitesse de chauffage constante et un troisième segment isothermique avec une cellule de calorimètre différentiel à balayage vide, et mesurer une première température différentielle à l'aide du premier détecteur de mesure de température différentielle, et une seconde température différentielle à l'aide du second détecteur de mesure de température différentielle ;
b) placer un échantillon d'étalonnage d'échantillon sur une position d'échantillon du calorimètre différentiel à balayage, et un échantillon d'étalonnage de référence sur une position de référence du calorimètre différentiel à balayage ;
c) effectuer une seconde expérience comprenant un quatrième segment isothermique, un cinquième segment à vitesse de chauffage constante et un sixième segment isothermique, et mesurer simultanément la première température différentielle à l'aide du premier détecteur de mesure de température différentielle, et la seconde température différentielle à l'aide du second détecteur de mesure de température différentielle ; et
d) calculer la résistance thermique d'échantillon de capteur, la résistance thermique de référence de capteur, la capacité thermique d'échantillon de capteur et la capacité thermique de référence de capteur.

**25.** Procédé selon la revendication 24, consistant en outre à calculer une constante de temps d'échantillon et une constante de temps de référence.

**26.** Procédé selon la revendication 24, dans lequel la capacité thermique d'échantillon est calculée selon l'expression :

$$C_s = \frac{m_s \cdot Cmat}{\frac{\Delta T_0}{\left(\frac{dT_s}{d\tau}\right) \cdot \tau_s} - 1}$$

où $m_s$ est la masse de l'échantillon d'étalonnage d'échantillon et $C_{mat}$ est la chaleur spécifique connue de l'échantillon d'étalonnage d'échantillon.

**27.** Procédé selon la revendication 25, dans lequel la capacité thermique de référence de capteur est calculée selon l'expression :

$$C_r = \frac{m_r \cdot C_{mat}}{\dfrac{\Delta T_0 + \Delta T}{\left(\dfrac{dT_s}{d\tau} - \dfrac{d\Delta T}{d\tau}\right) \cdot \tau_r} - 1}$$

où $m_r$ est la masse du second échantillon d'étalonnage de référence et $C_{mat}$ est la chaleur spécifique connue du second échantillon d'étalonnage de référence.

**28.** Procédé selon la revendication 1, dans lequel un calorimètre a une position de référence et une position d'échantillon pour une plage de température de service prédéterminée, et dans lequel les étapes d'étalonnage du capteur consistent à :

a) effectuer une première expérience avec rien sur la position d'échantillon ou sur la position de référence, ladite première expérience comprenant les étapes consistant à :

i) détecter au moins une température absolue et deux températures différentielles ;
ii) maintenir une température stable inférieure à la plage de température de service ;
iii) chauffer le calorimètre à une première vitesse de chauffage constante jusqu'à une température supérieure à la plage de service ;
iv) déterminer au moins une constante de temps ;

b) effectuer une seconde expérience avec un échantillon d'étalonnage sur au moins une des positions d'échantillon et de référence, comprenant les étapes consistant à :

i) détecter au moins une température absolue et deux températures différentielles ;
ii) maintenir une température stable inférieure à la plage de température de service ;
iii) chauffer le calorimètre à une seconde vitesse de chauffage constante jusqu'à une température supérieure à la plage de service ; et
iv) déterminer au moins une capacité et au moins une résistance.

**29.** Procédé selon la revendication 28, dans lequel la seconde expérience consiste à placer un échantillon d'étalonnage d'échantillon sur la position d'échantillon, et un échantillon d'étalonnage de référence sur la position de référence.

**30.** Procédé selon la revendication 29, dans lequel les échantillons d'étalonnage sont des échantillons d'étalonnage de saphir.

**31.** Procédé selon la revendication 29, dans lequel la constante de temps déterminée lors de la première expérience est la constante de temps d'échantillon, qui est déterminée à l'étape a(iv) selon l'expression :

$$\tau_s = \frac{\Delta T_0}{\left(\dfrac{dT_s}{d\tau}\right)}.$$

**32.** Procédé selon la revendication 31, dans lequel la capacité déterminée lors de la seconde expérience est la capacité thermique d'échantillon, et la capacité thermique d'échantillon est déterminée à l'étape b(iv) selon l'expression :

$$C_s = \frac{m_s \cdot Cmat}{\frac{\Delta T_0}{\left(\frac{dT_s}{d\tau}\right) \cdot \tau_s} - 1}.$$

**33.** Procédé selon la revendication 28, dans lequel la température stable à l'étape (a)(ii) est maintenue pendant une période suffisamment longue pour permettre l'équilibrage du calorimètre.

**34.** Procédé selon la revendication 1, dans lequel un calorimètre a une position de référence et une position d'échantillon pour une plage de température de service prédéterminée, et dans lequel les étapes d'étalonnage du capteur consistent à :

a) effectuer une première expérience avec un échantillon d'étalonnage d'échantillon sur la position d'échantillon et un échantillon d'étalonnage de référence sur la position de référence, ladite première expérience comprenant les étapes consistant à :

i) détecter au moins une température absolue et deux températures différentielles ;
ii) maintenir une température stable inférieure à la plage de température de service ;
iii) chauffer le calorimètre à une première vitesse de chauffage constante jusqu'à une température supérieure à la plage de service ;
iv) déterminer au moins une constante de temps ;

b) effectuer une seconde expérience avec l'échantillon d'étalonnage d'échantillon sur la position d'échantillon et l'échantillon d'étalonnage de référence sur la position de référence, comprenant les étapes consistant à :

i) détecter au moins une température absolue et deux températures différentielles ;
ii) maintenir une température stable inférieure à la plage de température de service ;
iii) chauffer le calorimètre à une seconde vitesse de chauffage constante jusqu'à une température supérieure à la plage de service ; et
iv) déterminer au moins une capacité de capteur et au moins une résistance de capteur,

dans lequel la première vitesse de chauffage constante diffère sensiblement de la seconde vitesse de chauffage constante.

**35.** Procédé selon la revendication 34, dans lequel la seconde vitesse de chauffage est au moins deux fois plus haute que la première vitesse de chauffage.

**36.** Procédé selon la revendication 34, dans lequel les échantillons d'étalonnage sont des échantillons d'étalonnage de saphir.

**37.** Procédé selon la revendication 34, consistant en outre à réguler la puissance du four sur la base de la température absolue.

**38.** Procédé selon la revendication 34, dans lequel l'au moins une constante de temps, l'au moins une résistance thermique et l'au moins une capacité thermique sont déterminées sur la base de l'équation de flux de chaleur à quatre termes.

**39.** Procédé selon la revendication 2, permettant de réduire les erreurs relatives dans les mesures de température absolue dues aux différences dans les capteurs de température utilisés dans un calorimètre différentiel à balayage de flux de chaleur, comprenant en outre les étapes consistant à :

déterminer au moins une constante de temps $t_1$, au moins une résistance thermique $R_s$, $R_r$, et au moins une capacité thermique $C_s$, $C_r$, sur la base de ladite équation de flux de chaleur à quatre termes.

**40.** Procédé selon la revendication 39, le procédé fournissant un écart de température au niveau de la position d'échantillon pour un échantillon d'indium placé sur la position de référence inférieur à environ 1,5 % d'un second écart de

température au niveau de la position d'échantillon pour un échantillon d'indium placé sur la position d'échantillon.

**41.** Procédé selon la revendication 39, dans lequel la mesure de la température de la base consiste à prendre une unique mesure de température absolue.

**42.** Procédé selon la revendication 39, dans lequel la mesure de la température différentielle entre la position d'échantillon et la base consiste à utiliser un détecteur de température de zone d'échantillon.

**43.** Procédé selon la revendication 39, dans lequel la mesure de la température différentielle entre la position d'échantillon et la position de référence consiste à utiliser un détecteur de température de zone de référence.

**44.** Procédé selon la revendication 39, dans lequel une température de la position d'échantillon est déterminée en soustrayant la température différentielle entre la position d'échantillon et la base de la température de la base.

**45.** Capteur pour calorimètre différentiel à balayage de flux de chaleur, comprenant :

a) une plateforme à échantillon (1) montée en haut d'un tube cylindrique à échantillon (2), ledit tube ayant une épaisseur de paroi cylindrique ;
b) une plateforme de référence (4) montée en haut d'un tube cylindrique de référence (5), ledit tube ayant une épaisseur de paroi cylindrique ;
c) une base (3) fixée en bas du tube cylindrique à échantillon et en bas du tube cylindrique de référence ; et
d) un thermocouple de base (12, 13, 14) pour mesurer une température absolue au niveau d'une position de base sur la base, une première configuration de thermocouple différentiel (9, 13) pour mesurer la température différentielle ($\Delta T_0$) au niveau de la plateforme d'échantillon par rapport à la base, et une seconde configuration de thermocouple différentiel (9, 11) pour mesurer la température différentielle ($\Delta T$) au niveau de la plateforme d'échantillon par rapport à la plateforme de référence.

**46.** Capteur selon la revendication 45, dans lequel la hauteur des tubes cylindriques à échantillon et de référence est choisie de manière à augmenter la sensibilité de l'instrument.

**47.** Capteur selon la revendication 45, dans lequel la hauteur des tubes cylindriques à échantillon et de référence est diminuée de manière à augmenter la résolution de l'instrument.

**48.** Capteur selon la revendication 45, dans lequel le rapport de forme du cylindre à échantillon est compris entre 9,8 et 13,8 $mm^{-1}$ (25 et 35 $pouces^{-1}$).

**49.** Capteur selon la revendication 45, dans lequel les tubes cylindriques à échantillon et de référence sont en constantan.

**50.** Capteur selon la revendication 45, dans lequel la première configuration de thermocouple différentiel comprend un détecteur de zone soudé de manière concentrique au-dessous de la plateforme à échantillon.

**51.** Capteur selon la revendication 45, dans lequel la hauteur du tube cylindrique à échantillon est comprise entre 0,51 et 1,27 mm (0,02 et 0,5 pouce).

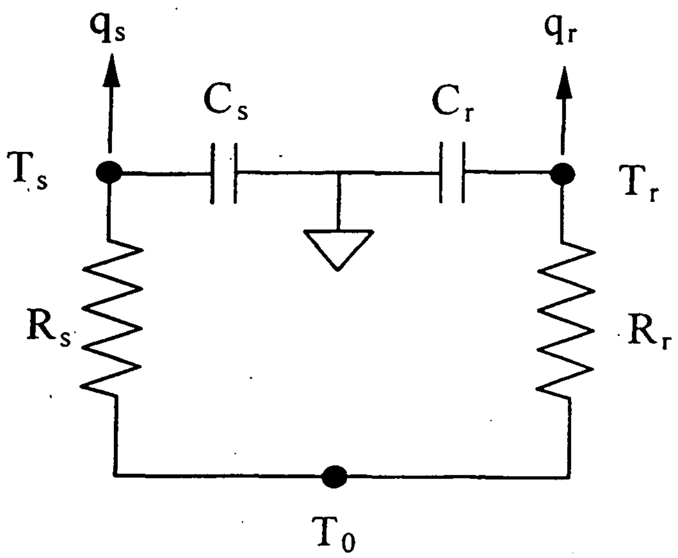


Figure 1

Figure 1a

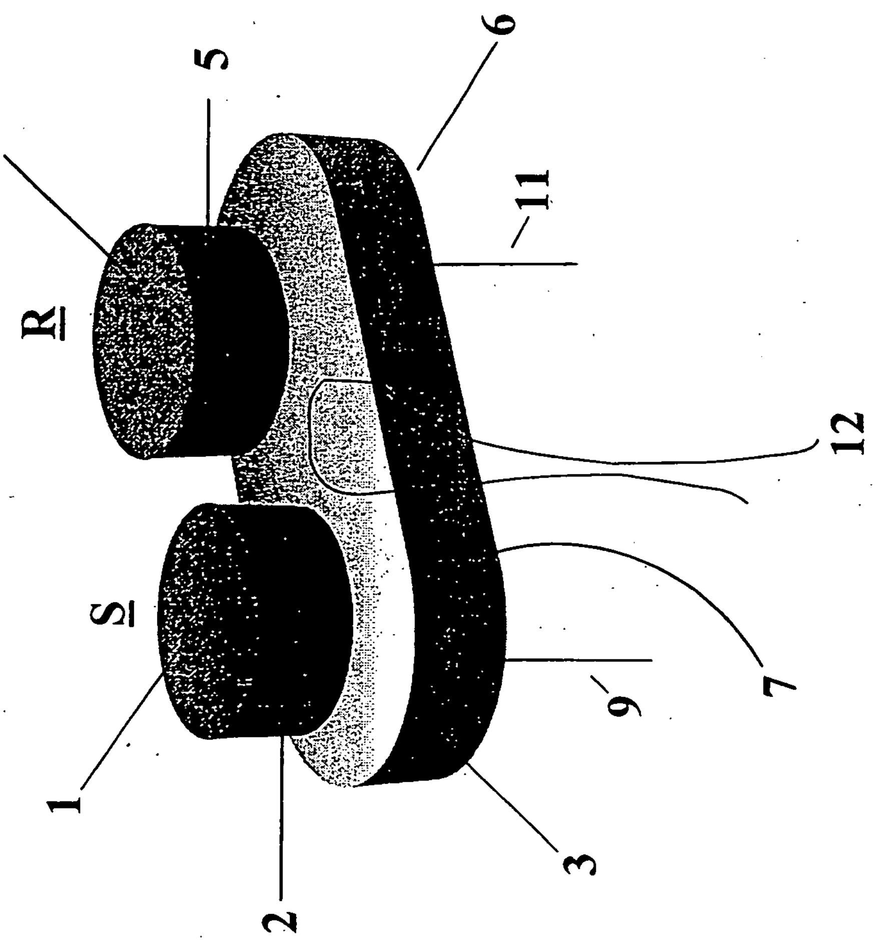

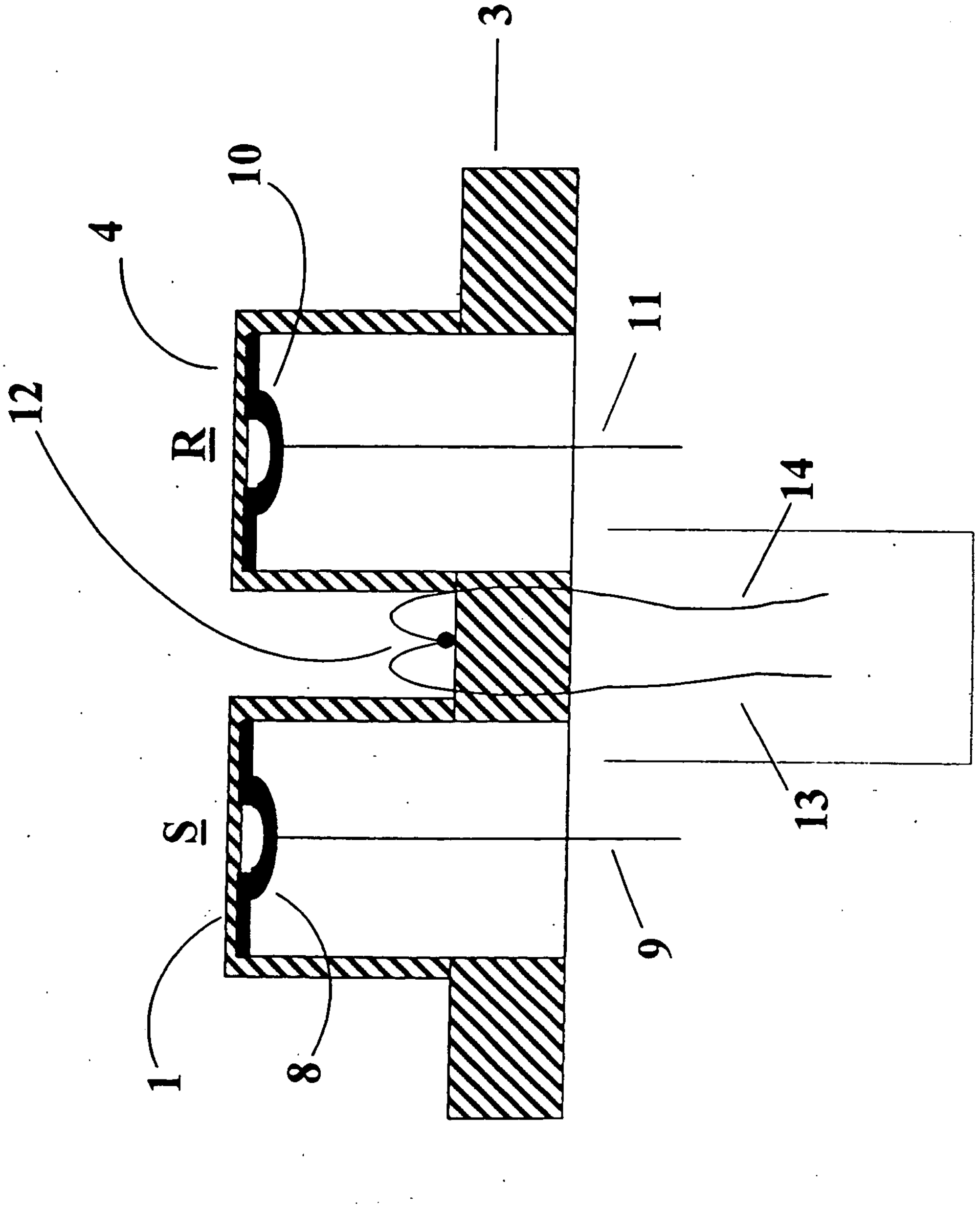


Figure 1b

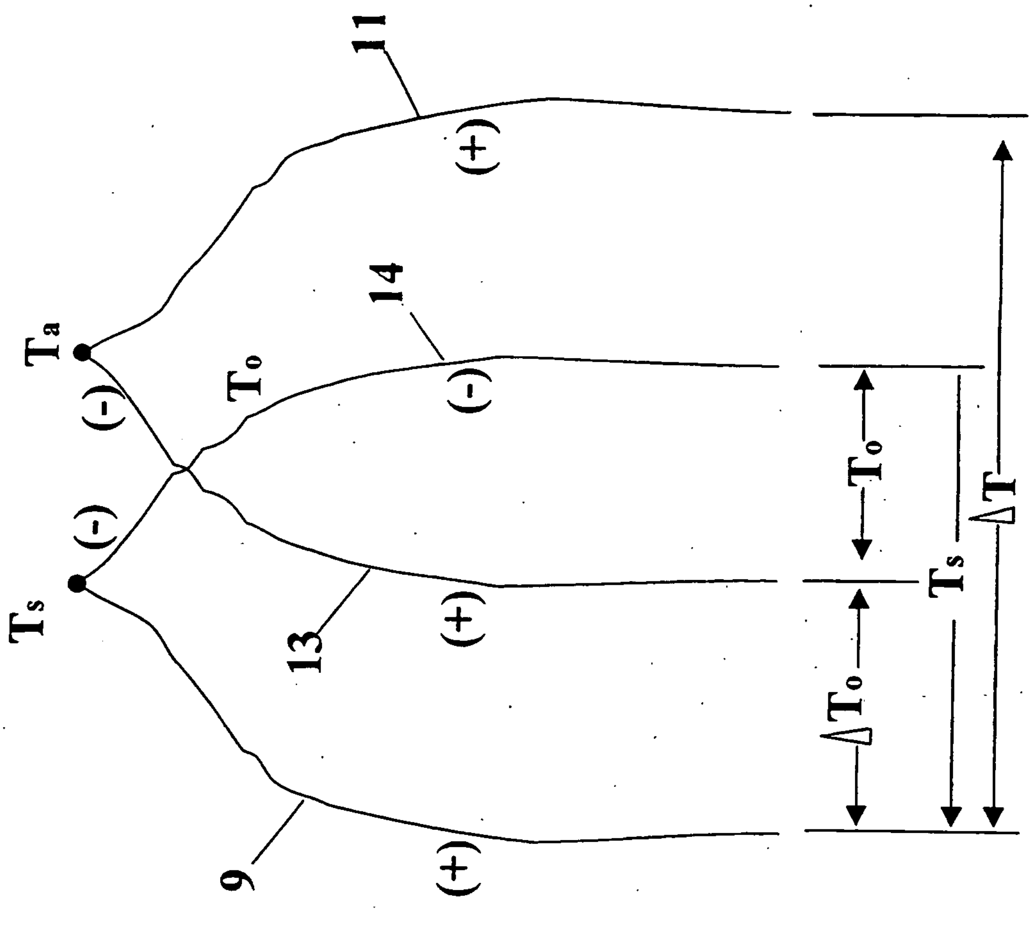


Figure 1c

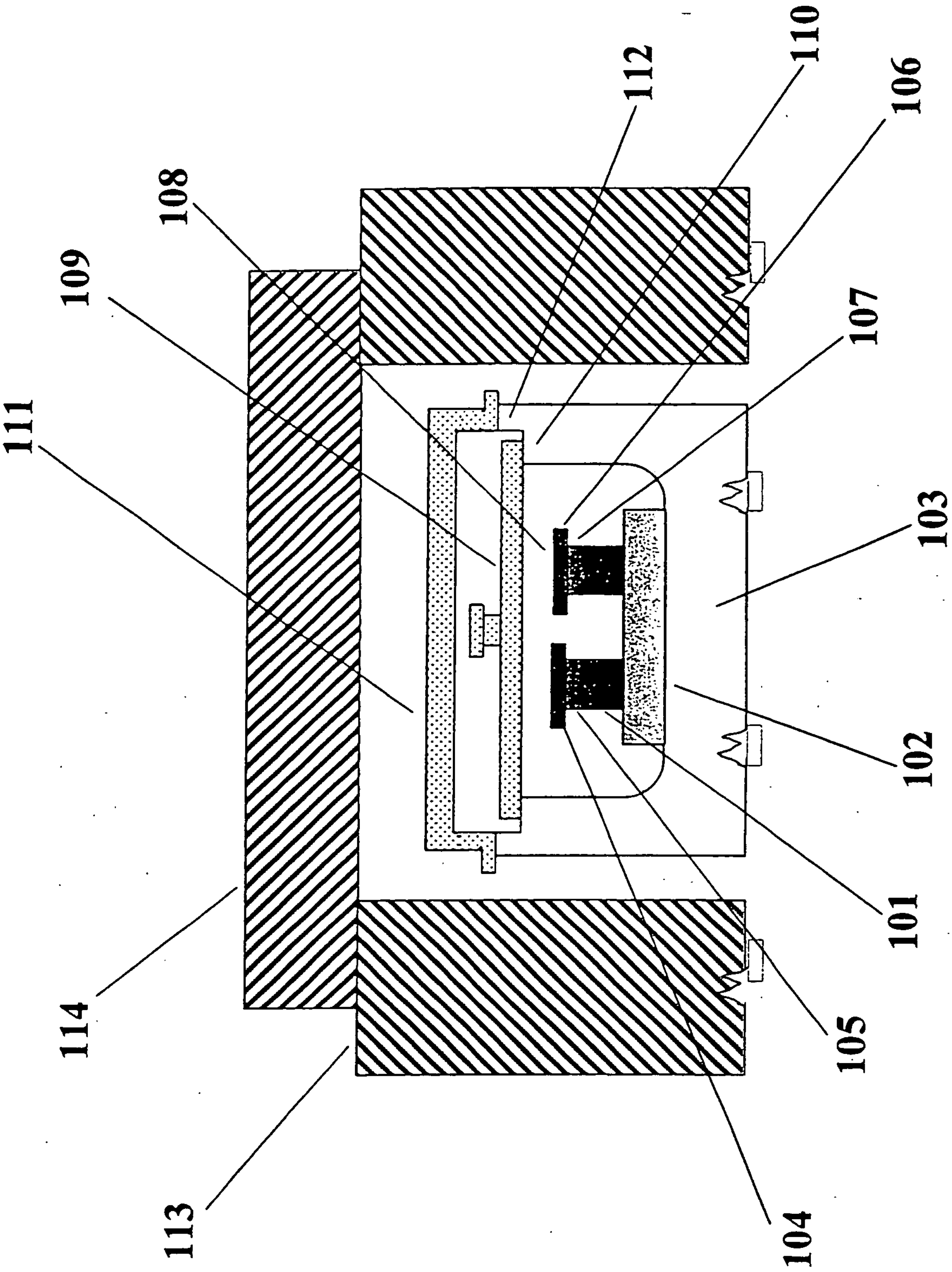


Figure 1d

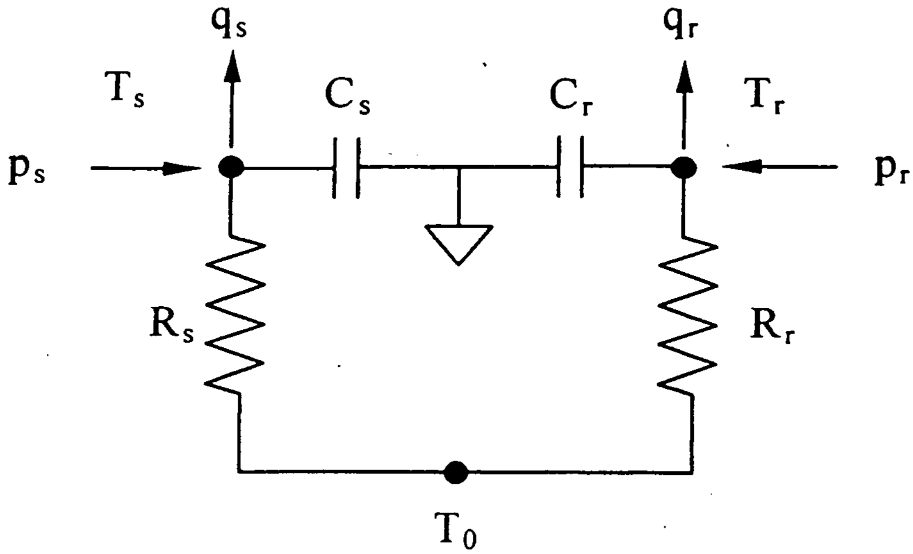


Figure 2

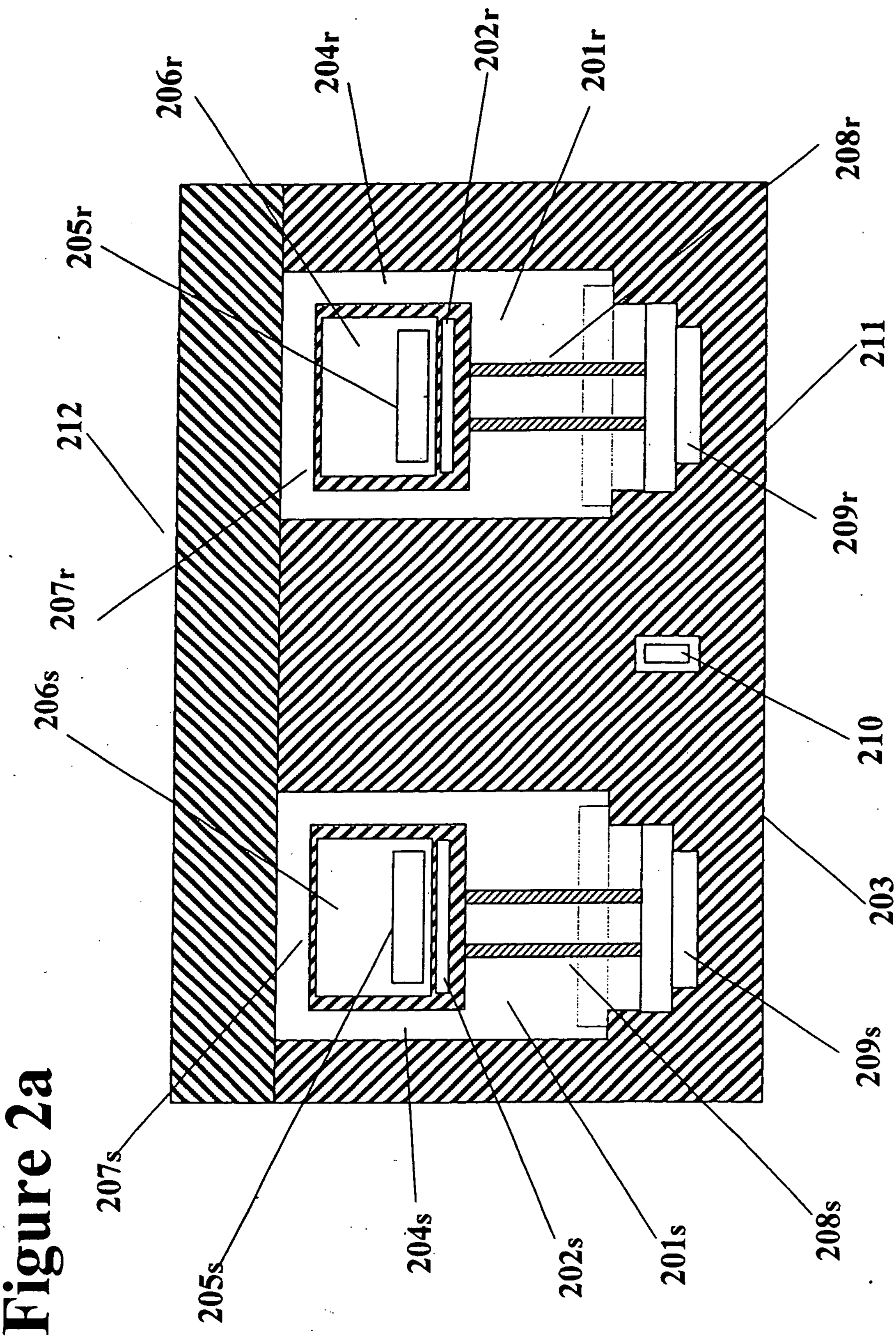
206r
204r
202r
201r
208r
205r
212
211
209r
207r
206s
210
203
209s
208s
201s
202s
204s
205s
207s

Figure 2a

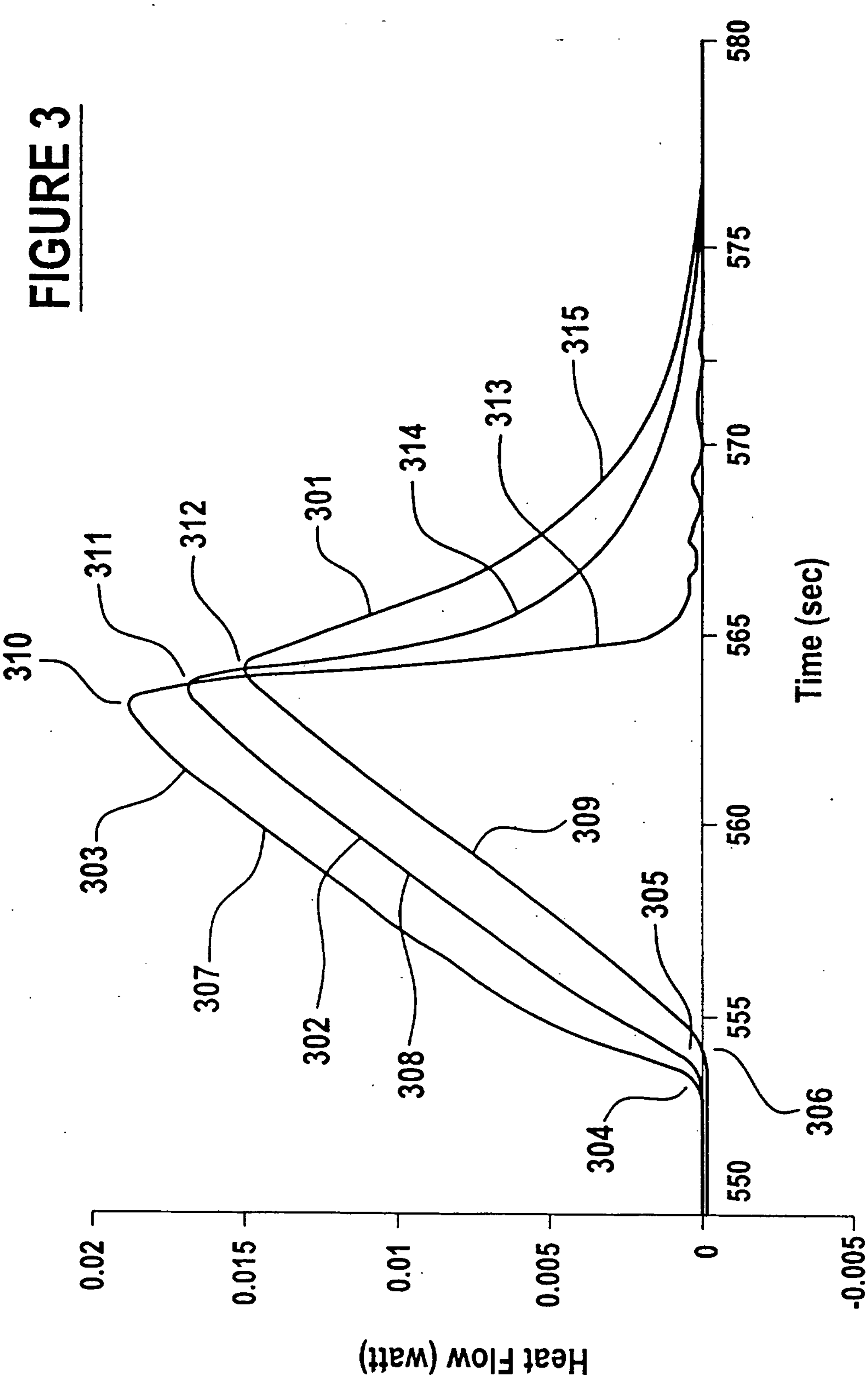
Heat Flow (watt)
0.02
0.015
0.01
0.005
0
-0.005
Time (sec)
550
555
560
565
570
575
580
301
302
303
304
305
306
307
308
309
310
311
312
313
314
315

FIGURE 3

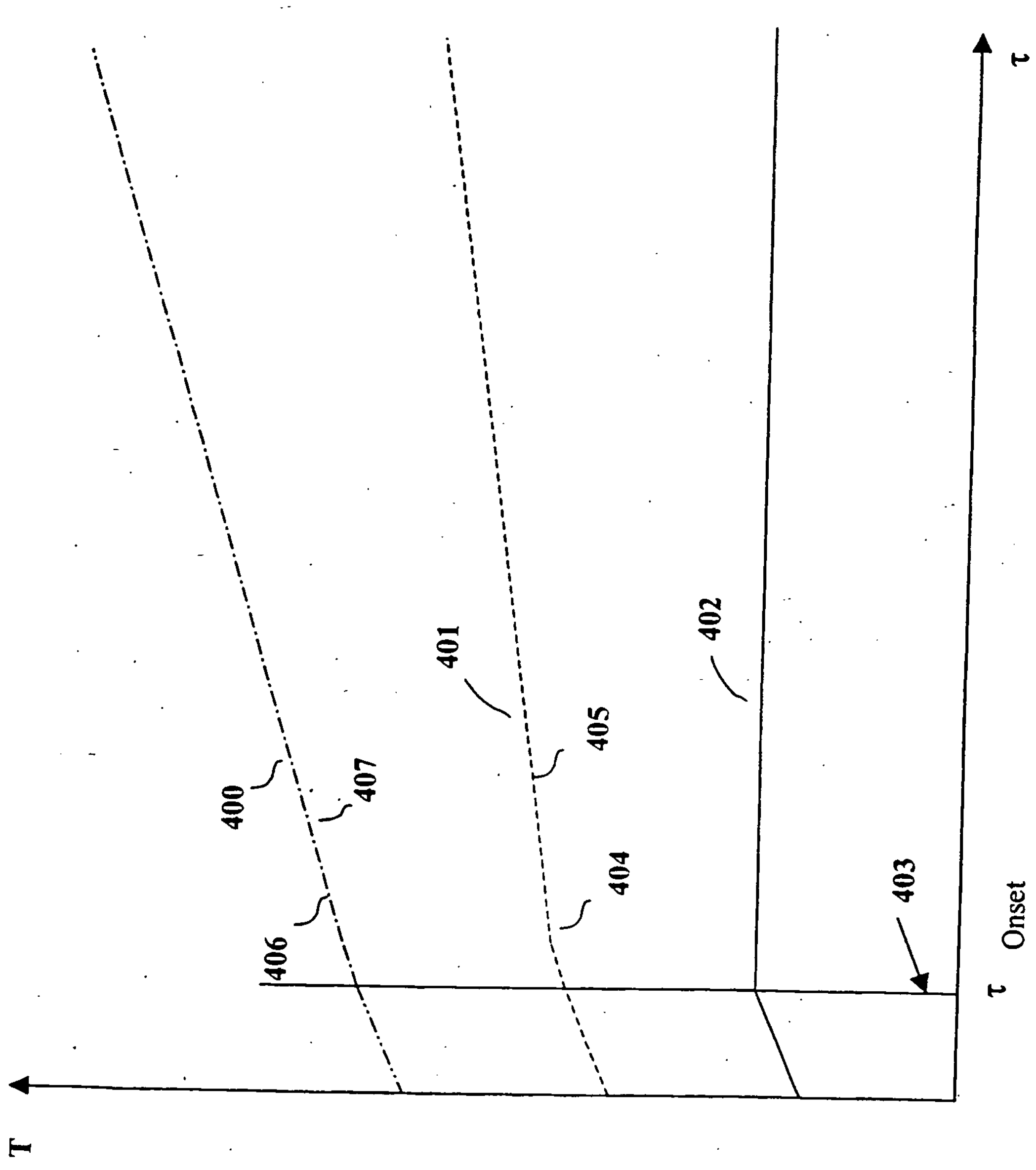


Figure 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4095453 A
- US 4350446 A
- US 5033866 A
- US 5288147 A
- US 5599104 A
- US 5224775 A


### Non-patent literature cited in the description


- **G. HÖHNE ; W. HEMMINGER ; H.-J. FLAMMERSHEIM.** Differential Scanning Calorimetry an Introduction for Practitioners. Springer-Verlag, 1996
- **HOHNE.** Differential Scanning Calorimetry: An Introduction for Practitioners. Springer-Verlag, 1996
- **A. SAVITSKY ; N.J.E. GOLAY.** Smoothing and Differentiation by Simplified Least Squares Procedures. *Analytical Chemistry,* vol. 36 (8), 1627-1639